# EUROPEAN PATENT SPECIFICATION

(11) **EP 3 234 096 B1**
(45) Date of publication and mention of the grant of the patent: **25.06.2025**
(21) Application number: 15834760.9
(22) Date of filing: 15.12.2015
(51) Int. Cl.: C12C 7/053, C12C 7/24, C12C 7/26, C12C 11/00, C12C 12/00, C12C 3/00, C12C 5/00

(54) **USE OF ENZYMATICALLY HYDROLYZED VEGETABLE PROTEIN IN BREWING FERMENTED BEVERAGES**
VERWENDUNG VON ENZYMATISCH HYDROLYSIERTEM PFLANZENPROTEIN BEIM BRAUEN VERGORENER GETRÄNKE
UTILISATION DE PROTÉINES VÉGÉTALES HYDROLYSÉES PAR VOIE ENZYMATIQUE DANS LE BRASSAGE DE BOISSONS FERMENTÉES

(30) Priority: 15.12.2014 US 201462091691 P
(43) Date of publication of application: 25.10.2017
(73) Proprietor: Corn Products Development, Inc., Jabaquara 04311-000 São Paulo (BR)
(72) Inventor: BAX, Fabio Jr., CEP-13840-000 Mogi-guacu, SP (BR); YAMAMOTO, Walter T., CEP-13840-000 Mogi-guacu, SP (BR); BERTOLI, Jose, CEP-04311-000 São Paulo SP (BR)
(74) Representative: Novagraaf Group
(86) International application number: PCT/IB2015/002488
(87) International publication number: WO 2016/113590

(56) References cited:
- EP-A1- 1 840 201
- GB-A- 1 442 401
- JP-A- H0 947 276
- US-A1- 2008 118 601
- US-A1- 2009 022 847
- MANNHEIM ADIE ET AL: "Enzyme-modified proteins from corn gluten meal: Preparation and functional properties", JOURNAL OF THE AMERICAN OIL CHEMISTS' SOCIETY (JAOCS), SPRINGER, DE, vol. 69, no. 12, 1 January 1992 (1992-01-01), pages 1163 - 1169, XP002172913, ISSN: 0003-021X, DOI: 10.1007/BF02637674

## Description

### TECHNICAL FIELD

This invention relates to a method for the preparation of fermented beverages produced using a fermentation adjunct.

### BACKGROUND OF THE INVENTION

Natural and seasonal crop variation in amino acid and protein composition and/or concentration on barley malt and adjuncts -- i.e., malt replacements -- generated by weather influence is a critical factor which may negatively affect brewing yeast nutrition and fermentation performance as well as beer foam quality when minimum requirements for beer production are not accomplished.

Examples of the impact of natural variation on barley composition are detailed in M. Jones, "Amino Acid Composition of Wort", European Brewing Convention Monograph, 1, Zeist pp. 90-105 (1974). The examples illustrate that α-amino nitrogen content may vary from 592 up to 946 mg/grain depending on barley variety and proline content increases when the barley plant grows at low moisture availability.

For fermented beverages, a major aim of the management of fermentation is to ensure that flavor-active carbonyls, 2,3-butanedione and 2,3-pentanedione, both of which are vicinal diketones (referred to herein as "VDKs" or "diacetyl") that impart a 'butterscotch' flavor and aroma to beers, are each present at an appropriate concentration in the finished fermented beverage. This will be facilitated if the "wort" -- i.e., the liquor run-off after extracting a prepared solid material, such as cereal grain or malt, with hot water -- contains a suitable proportion of class 2 amino acids, i.e. isoleucine, valine, phenylalanine, glycine, and tyrosine.

The measures that are taken to control diacetyl levels must not adversely affect other flavor parameters or fermentation efficiency. The inevitable compromise usually results in the diacetyl-rest determining total vessel residence time, which impacts cellar efficiency.

To overcome the problems detailed above, it has been suggested that brewing yeast strains may be genetically modified such that the propensity for diacetyl formation is reduced and allow precise manipulation of specific brewing characteristics. Although two strategies have been proposed for the use of genetically modified yeast, none are or have been used in commercial brewing.

R.A. Mussche and F.R. Mussche, Chair J. se Clerk XII: Flavors in Beer (Université Catholique de Louvain, Louvain, 2006) discloses that 92.5% of the world beer production is brewed by using malt and malt replacements (adjuncts). The remaining 7.5% is brewed with either 100% malt or 100% pseudo cereals.

Finally, C.A. Boulton and D.E. Quain, Brewing Yeast and Fermentation, pp. 127-181 (John Wiley and Sons, 2013) discloses that the amino nitrogen composition of wort has far-reaching effects upon fermentation performance and on beer flavor. Where malt is used as the principal source of extract, the quantity and composition of amino acids are such that these problems are not encountered. However, care must be exercised when using adjuncts, many of which are relatively deficient in amino nitrogen.

The European Brewery Convention ("EBC"), the American Association of Brewing Chemists ("ASBC"), and the Mitteleuropaische Brautechnische Analysenkommission ("MEBAK"), among other brewing associations, have adopted internationally recognized methods to evaluate nitrogen compounds quality and availability on malt, which are analysis of Total Nitrogen (Analytica EBC 4.3.1 or 4.3.2), Soluble Nitrogen (Analytica EBC 4.9.1 or 4.9.2 or 4.9.3), Kohlbach Index (Analytica EBC 4.9.1), Hartong 45°C (MEBAK 3.1.4.11) and Free amino acid content (FAN - Analytica EBC 4.10).

It is generally accepted by brewers that minimum requirements for Pilsner malts to prevent negative effects of low or poor amino acids composition in beer production are Total Nitrogen on dry malt 1.6% - 1.8% (or Protein content 10.5% - 11.5%), Total Soluble Nitrogen 0.65% - 0.75%, Kohlbach Index 36-45%, Hartong 45°C 35 min. and FAN higher than 160 mg/L to ensure suitable yeast growth and beer foam stability results higher than 240 seconds (Nibem method).

JPH0947276A relates to a process for the production of beer, in which a peptide obtained from the hydrolysis of a protein is added to the wort. In the practice of this document, the peptide is produced by enzymatic hydrolysis by means of an alkaline protease.

The references detailed above are used by the brewing industry to select different procedures and technologies aiming to compensate for undesirable malt and/or adjunct quality variation in beer production - e.g. utilization of different barley varieties, changes in malt specifications with regard to nitrogen content, changes in geographic origin of malt, different ratios of 2 and 6 rows barley blends, utilization of other yeast nutrient sources - e.g. yeast extract, ammonia chloride, ammonia phosphate or ammonia sulfate - or even foam stability additives utilization - e.g. Propylene Glycol Alginate (PGA - INS 405), Arabic gum (INS 414), Xanthan gum (INS 415), Pectin (INS 440), Methyl cellulose (INS 461), Hydroxypropylmethyl cellulose (INS 464) or Carboxymethyl cellulose (INS 466). However, those procedures and technologies may increase beer formulation cost up to approximately 15%, particularly those which reduce supply chain operations efficiency for malt. In addition, breweries are often unwilling to declare food additives on their beer labels to avoid risk of negatively affect customer perception on their beer quality.

In addition to the above, while some ammonia based yeast nutrients present competitive application cost, they have limited efficiency for yeast nutrition because they may induce a catabolic repression effect on amino acid uptake from malt and adjunct origin that can generate adverse effects on yeast nutrition and fermentation. Conversely, while yeast extract presents suitable amino acid composition for yeast nutrition, it is an expensive alternative for application in beer production.

The alternatives and technologies detailed above are able to compensate for some of the natural variation of amino acid content in malt or their effects on beer quality, particularly diacetyl formation and foam quality, but none achieves the desired performance combination characteristics without undesirable side effects and desired ingredient labeling.

In some aspects, the present invention offers a suitable solution for those issues described above and additionally offers a new technology to speed up wort fermentation and increase efficiency of cellar utilization in breweries.

### SUMMARY OF THE INVENTION

The present invention relates to a method for preparing a fermented beverage, which involves an enzymatically hydrolyzed vegetable protein which is comprised of one or a combination of dent corn, waxy corn, high amylose corn, rice, waxy rice, pea, chick pea, yellow pea, navy beans, fava beans, lentils, and/or wheat, where the enzymatically hydrolyzed vegetable protein is added to the fermentation medium, as defined in appended claim 1.

In one aspect, the enzymatically hydrolyzed vegetable protein is comprised of the amino acids glycine, histidine, arginine, valine, lysine, phenylalanine, tyrosine, isoleucine and leucine and hydrophobic proteins.

The method of the present invention provides reduced fermentation time of the cereal based fermented beverages in the form of beer, increasing the cellar output as well as enhancing yeast nutrition and beer foam quality by adding on mashing or wort boiling or wort cooling or other step before or during fermentation, an enzymatically hydrolyzed vegetable protein which properly supplies a balanced combination of foam enhancing proteins and free amino acids of high nutritional value for yeast.

The present invention is a method comprising the steps of obtaining an enzymatically hydrolyzed vegetable protein, combining the enzymatically hydrolyzed vegetable protein with a fermentable medium; and fermenting the fermentable medium to form a fermented beverage that is beer, with the details as given in claim 1.

In another aspect, the fermentation medium is essentially free of added ammonium ions. In yet another aspect, the enzymatically hydrolyzed vegetable protein is derived from corn, corn gluten meal, or at least one of dent corn, waxy corn, or high amylose corn.

In another aspect, the corn gluten meal has about 50% to about 70% protein and about 10 to about 35% starch. The enzymatically hydrolyzed vegetable protein is derived from a source comprising starch.

The enzymatically hydrolyzed vegetable protein is derived by hydrolyzing at least a portion of starch in the source with an amylase enzyme. The protein of the enzymatically hydrolyzed vegetable protein is further enzymatically hydrolyzed with proteolytic enzymes after the hydrolyzing of the starch.

In some aspects, the present invention also includes mashing the fermentable medium, wherein the enzymatically hydrolyzed vegetable protein is combined with the fermentable medium during the mashing step.

In yet other aspects, the present invention includes wort boiling the fermentable medium, wherein the enzymatically hydrolyzed vegetable protein is combined with the fermentable medium during the wort boiling step.

In an aspect, the present invention includes wort cooling the fermentable medium, wherein the enzymatically hydrolyzed vegetable protein is combined with the fermentable medium during the wort cooling step.

In yet another aspect, the enzymatically hydrolyzed vegetable protein is combined with the fermentable medium during the fermenting step.

The fermented beverage produced by one or more methods described herein is beer. In yet another aspect, the yeast nutrient used to produce a fermented beverage comprises an enzymatically hydrolyzed vegetable protein.

A first foam of the fermented beverage is stable for a longer time than a second foam of a fermented beverage produced with the same process and the same ingredients except without the enzymatically hydrolyzed vegetable protein.

A first foam of the fermented beverage is of a better quality than a second foam of a fermented beverage produced with the same process and the same ingredients except without the enzymatically hydrolyzed vegetable protein.

### BRIEF DESCRIPTION OF THE FIGURES

The present invention can be further explained with reference to the attached drawings, wherein like structures are referred to by like numerals throughout the several views. The drawings shown are not necessarily to scale, with emphasis instead generally being placed upon illustrating the principles of the present invention. Further, some features may be exaggerated to show details of particular components.
**FIG. 1** is a flowchart showing a non-limiting example of method for brewing beer.
**FIG. 2** is a graph comparing the fermentation of the Test 1 and Control 1 brews.
**FIG. 3** is a graph comparing the fermentation of the Test 2 and Control 1 brews.
**FIG. 4** is a graph comparing the fermentation of the Test 3 and Control 1 brews.
**FIG. 5** is a graph comparing the fermentation of the Test 4 and Control 2 brews.
**FIG. 6** is a graph comparing the fermentation of the Test 4 and Control 2 brews.
**FIG. 7** is a graph comparing the fermentation of the Test 2 and Test 5 brews.
**FIG. 8** is a graph comparing the fermentation of the Test 6 and Control 3 brews.
**FIG. 9** is a graph comparing the fermentation of the Test 7 and Control 3 brews.
**FIG. 10** is a graph comparing the protein, FAN and sulphur dioxide of the Control 1 and Test 1 brews.
**FIG. 11** is a graph comparing the protein, FAN and sulphur dioxide of the Control 3 and Tests 6&7 brews.
**FIG. 12** is a graph comparing the color and bitterness of the Control 1 and Test 1 brews.
**FIG. 13** is a graph comparing the color and bitterness of the Control 3 and Tests 6 & 7 brews.
**FIG. 14** is a graph comparing the VDK content of the Control 1 and Test 1 brews.
**FIG. 15** is a graph comparing the VDK content of the Control 3 and Test 6 brews.
**FIG. 16** is a graph comparing the foam stability of the Control 1 and Test 1 brews.
**FIG. 17A** is an image showing the foam quality of Test 1 and Control 1 after 8 seconds.
**FIG. 17B** is an image showing the foam quality of Test 1 and Control 1 after 1 minute, 1 second.
**FIG. 17C** is an image showing the foam quality of Test 1 and Control 1 after 4 minutes, 1 second.

In addition, any measurements, specifications and the like shown in the figures are intended to be illustrative, and not restrictive. Therefore, specific structural and functional details disclosed herein are not to be interpreted as limiting, but merely as a representative basis for teaching one skilled in the art to variously employ the present invention.

Among those benefits and improvements that have been disclosed, other objects and advantages of this invention can become apparent from the following description taken in conjunction with the accompanying figures. Detailed embodiments of the present invention are disclosed herein; however, it is to be understood that the disclosed embodiments are merely illustrative of the invention that may be embodied in various forms. In addition, each of the examples given in connection with the various aspects of the invention is intended to be illustrative, and not restrictive.

### DETAILED DESCRIPTION OF THE INVENTION

Among those benefits and improvements that have been disclosed, other objects and advantages of this invention can become apparent from the following description taken in conjunction with the accompanying figures. Detailed embodiments of the present invention are disclosed herein.

Throughout the specification and claims, the following terms take the meanings explicitly associated herein, unless the context clearly dictates otherwise. The phrases "in one aspect" and "in some aspects" and the like, as used herein, do not necessarily refer to the same embodiment(s), though it may. Furthermore, the phrases "in another aspect" and "in some other aspects" as used herein do not necessarily refer to a different aspect (embodiment), although it may. Thus, as described below, various aspects (embodiments) of the invention may be readily combined, without departing from the scope of the invention, that is defined by the appended claims.

The present invention is a method as defined in claim 1, which comprises the steps of obtaining an enzymatically hydrolyzed vegetable protein, combining the enzymatically hydrolyzed vegetable protein with a fermentable medium; and fermenting the fermentable medium to form a fermented beverage that is beer.

In an aspect, the fermentation medium is essentially free of added ammonium ions. In another aspect, the enzymatically hydrolyzed vegetable protein is derived from corn, corn gluten meal, or at least one of dent corn, waxy corn, or high amylose corn.

In another aspect, the corn gluten meal has about 40% to about 80% protein and about 10 to about 50% starch. In another aspect, the corn gluten meal has about 50% to about 70% protein and about 10 to about 35% starch. The enzymatically hydrolyzed vegetable protein is derived from a source comprising starch.

The enzymatically hydrolyzed vegetable protein is derived by hydrolyzing at least a portion of starch in the source with an amylase enzyme. The protein of the enzymatically hydrolyzed vegetable protein is further enzymatically hydrolyzed with proteolytic enzymes after the hydrolyzing of the starch.

In some aspects, the present invention also includes mashing the fermentable medium, wherein the enzymatically hydrolyzed vegetable protein is combined with the fermentable medium during the mashing step.

In yet other aspects, the present invention includes wort boiling the fermentable medium, wherein the enzymatically hydrolyzed vegetable protein is combined with the fermentable medium during the wort boiling step.

In an aspect, the present invention includes wort cooling the fermentable medium, wherein the enzymatically hydrolyzed vegetable protein is combined with the fermentable medium during the wort cooling step.

In yet another aspect, the enzymatically hydrolyzed vegetable protein is combined with the fermentable medium during the fermenting step.

The method of the present invention produces beer as a fermented beverage. The yeast nutrient used to produce the fermented beverage comprises an enzymatically hydrolyzed vegetable protein.

The fermented beverage produced using a process that includes an enzymatically hydrolyzed vegetable protein is beer.

A first foam of the fermented beverage produced by the method of the present invention is stable for a longer time than a second foam of a fermented beverage produced with the same process and the same ingredients except without the enzymatically hydrolyzed vegetable protein.

A first foam of the fermented beverage produced by the method of the present invention is of a better quality than a second foam of a fermented beverage produced with the same process and the same ingredients except without the enzymatically hydrolyzed vegetable protein.

In one aspect, the enzymatically hydrolyzed vegetable protein, also referred to as partial enzymatic digestion of (source) protein, is composed primarily of free amino acids, small peptides (peptides chains of five or fewer amino acids), polypeptides (peptides chains of six up to fifty amino acids), proteins (peptides chains with more than fifty amino acids) and salts resulting from the essentially controlled hydrolysis of peptide bonds in edible proteinaceous materials, catalyzed by food-grade enzymes and/or heat.

The edible proteinaceous material used as raw material is derived from safe and suitable vegetable or plant sources as given above, selected form the group consisting of dent corn, waxy corn, high amylose corn, wheat, dry peas, fava beans, chick peas, lentils and rice. In one aspect, the proteinaceous material is derived solely from corn. In one aspect, the proteinaceous material is derived from corn gluten meal that has been derived from the wet milling of corn (Zea mays), e.g. dent corn (No. 2), waxy corn, high amylose corn, or could also be from dry peas, chick peas, lentils, and rice.

In one aspect, the proteinaceous material is derived from a source having at least about 40% protein. In one aspect, the source has about 40% to about 80% by weight protein. In one aspect, the source has about 40% to about 75% by weight protein. In another aspect, the source has about 40% to about 70% by weight protein. In yet another aspect, the source has about 40% to about 65% by weight protein. In an aspect, the source has about 40% to about 60% by weight protein. In one aspect, the source has about 40% to about 55% by weight protein. In another aspect, the source has about 40% to about 50% by weight protein. In yet another aspect, the source has about 40% to about 100% by weight protein. In yet another aspect, the source has about 40% to about 90% by weight protein. In yet another aspect, the source has about 50% to about 70% by weight protein.

In one aspect, the proteinaceous material can also include at least about 10% starch by weight. In an aspect, the source has about 10% to about 50% starch by weight. In another aspect, the source has about 10% to about 45% starch by weight. In one aspect, the source has about 10% to about 40% starch by weight. In an aspect, the source has about 10% to about 35% starch by weight. In one aspect, the source has about 10% to about 30% starch by weight. In one aspect, the source has about 10% to about 35% starch by weight. In yet another aspect, the source has about 10% to about 25% starch by weight. In one aspect, the source has about 10% to about 20% starch by weight.

In one aspect, the proteinaceous material is derived from the enzymatic hydrolysis of corn gluten meal.

In one aspect, the enzymatically hydrolyzed vegetable protein includes at least 40% protein and at least 10% starch. In an aspect, the enzymatically hydrolyzed vegetable protein includes 40% to 80% protein and 10% to 50% starch. In another aspect, the enzymatically hydrolyzed vegetable protein includes 40% to 70% protein and 10% to 50% starch. In one aspect, the enzymatically hydrolyzed vegetable protein includes 40% to 60% protein and 10% to 50% starch. In yet another aspect, the enzymatically hydrolyzed vegetable protein includes 40% to 50% protein and 10% to 50% starch. In another aspect, the enzymatically hydrolyzed vegetable protein includes 40% to 80% protein and 10% to 40% starch. In yet another aspect, the enzymatically hydrolyzed vegetable protein includes 40% to 80% protein and 10% to 35% starch. In one aspect, the enzymatically hydrolyzed vegetable protein includes 40% to 80% protein and 10% to 30% starch. In one aspect, the enzymatically hydrolyzed vegetable protein includes 40% to 80% protein and 25% to 50% starch. In an aspect, the enzymatically hydrolyzed vegetable protein includes 40% to 80% protein and 10% to 15% starch. In yet another aspect, the enzymatically hydrolyzed vegetable protein includes 50% to 70% protein and 10% to 35% starch. In another aspect, the enzymatically hydrolyzed vegetable protein includes 50% to 70% protein and 10% to 15% starch.

In one aspect, the enzymatically hydrolyzed vegetable protein includes 5% to 95% carbohydrate. In one aspect, the enzymatically hydrolyzed vegetable protein includes 10% to 95% carbohydrate. In one aspect, the enzymatically hydrolyzed vegetable protein includes 20% to 95% carbohydrate. In one aspect, the enzymatically hydrolyzed vegetable protein includes 30% to 95% carbohydrate. In one aspect, the enzymatically hydrolyzed vegetable protein includes 40% to 95% carbohydrate. In one aspect, the enzymatically hydrolyzed vegetable protein includes 50% to 95% carbohydrate. In one aspect, the enzymatically hydrolyzed vegetable protein includes 60% to 95% carbohydrate. In one aspect, the enzymatically hydrolyzed vegetable protein includes 70% to 95% carbohydrate. In one aspect, the enzymatically hydrolyzed vegetable protein includes 80% to 95% carbohydrate. In one aspect, the enzymatically hydrolyzed vegetable protein includes 90% to 95% carbohydrate.

In one aspect, the enzymatically hydrolyzed vegetable protein includes 5% to 90% carbohydrate. In one aspect, the enzymatically hydrolyzed vegetable protein includes 5% to 80% carbohydrate. In one aspect, the enzymatically hydrolyzed vegetable protein includes 5% to 70% carbohydrate. In one aspect, the enzymatically hydrolyzed vegetable protein includes 5% to 60% carbohydrate. In one aspect, the enzymatically hydrolyzed vegetable protein includes 5% to 50% carbohydrate. In one aspect, the enzymatically hydrolyzed vegetable protein includes 5% to 40% carbohydrate. In one aspect, the enzymatically hydrolyzed vegetable protein includes 5% to 30% carbohydrate. In one aspect, the enzymatically hydrolyzed vegetable protein includes 5% to 20% carbohydrate. In one aspect, the enzymatically hydrolyzed vegetable protein includes 5% to 15% carbohydrate.

In general, the method of enzymatically hydrolyzing a vegetable protein source (e.g. corn gluten meal having the from about 40% to about 80% protein and from about 10% to about 50% starch, all percents being by weight) is comprised of the following steps:
1) Vegetable protein source is slurried in a major amount by weight of water, typically such that the vegetable protein source (e.g., corn gluten meal from No. 2 dent corn or waxy corn having about 40% to about 80% protein and about 10 to about 50% starch) is present at from about 2% to about 50% by weight, e.g. from about 20% to about 40% by weight.
2) The pH is adjusted to from about 5.0 to about 6.5 with organic or inorganic acids including but not limited to, hydrochloric, sulfuric, phosphoric, citric, or fumaric acid or with bases including but not limited to, sodium hydroxide, potassium hydroxide, soda ash, phosphates or their blends.
3) One or more amylases are then added to the vegetable protein source slurry.
4) The vegetable protein source slurry is heated in a reactor under controlled conditions to a temperature between about 50°C to 90°C with sufficient agitation to homogenize the vegetable protein source. The slurry is held at a final temperature between about 80°C to about 100°C for about one hour with continued agitation.
5) The pH is adjusted as above described to a pH of about 6.5 to 8.0 depending on the conditions required for the selected specific proteolytic enzyme(s) described in the next step in the process.
6) An enzyme preparation comprised of one or more proteolytic enzymes (e.g., a protease) is added to the pH-controlled, homogenized slurry, at a dosage level of 0.25 to 4.0% (depending upon specific enzyme activities) in an amount effective to achieve the desired protein level and free amino acids content, as well as the free amino nitrogen (FAN) during a subsequent hydrolysis step. A typical enzyme preparation is comprised of proteases, aminopeptidases, lipases, and/or phospholipases from fungal, bacterial or vegetable origin (e.g. a mixture of one or more proteases). In some aspects, the enzyme preparation can include one or more immobilized enzymes and/or soluble enzymes.
7) The resulting enzyme-dosed mixture is then held under conditions conducive to hydrolysis for a time sufficient to hydrolyze the vegetable protein to the desired level of soluble protein, free amino acids and FAN, typically from about 2 to about 50 hours (e.g. about 20 hours at the recommended best temperature for the chosen enzymes), and typically to reach a FAN of from about 10 to about 150 mg/ml in the enzyme hydrolyzed product mixture.
8) The enzymes are then deactivated, typically by heating to an inactivation temperature for the enzyme(s), and/or adjusting the pH to an inactivating pH for the enzymes, typically a pH of from about 2.0 to about 4.0.
9) The product is then dried to a stable moisture content, typically from about 1% to about 8% by weight moisture, and typically using a spray dryer, a flash dryer, and/or a drum dryer. The product can optionally be subjected to further concentration or fractionation, as required.

The dried product of the above process is hereinafter referred to as the enzymatically hydrolyzed vegetable protein or the yeast nutrient.

In one aspect of the invention, the product can be purified using fractionation or separation to enhance or reduce the concentration of one or more amino acids. The fractionation or separation could be achieved using chromatographic techniques, membrane based separations or other accepted fractionation and separation techniques. In another aspect of the invention, the product can be subjected to dehydration/ concentration without the application of heat including processes such as freeze drying.

In one aspect, the enzymatically hydrolyzed vegetable protein source has a composition as described in Table 1:

**TABLE 1**

| Parameter | Unit | Min. | Max |
|---|---|---|---|
| Protein | % | 40 | 80 |
| Carbohydrates | % | 10.0 | 50.0 |
| Oil | % | 5.0 | 10.0 |
| Ash | % | 7.0 | 15.0 |
| Fiber | % | 0.0 | 5.0 |
| Soluble protein | % | 30.0 | 80.0 |
| FAN (dilution: 3 g/hL) | mg/L | 10.0 | 150.0 |
| Total Aminoacids | g/100g | 50.0 | 70.0 |
| Free Aminoacids | g/100g | 2.0 | 15.0 |

| Total Aminoacids | | | |
|---|---|---|---|
| Aspartic acid | g/100g | 3.00 | 5.00 |
| Glutamic acid | g/100g | 10.00 | 20.00 |
| Serine | g/100g | 2.00 | 5.00 |
| Glycine | g/100g | 1.50 | 3.00 |
| Histidine | g/100g | 1.30 | 1.50 |
| Arginine | g/100g | 2.30 | 2.80 |
| Threonine | g/100g | 2.00 | 3.00 |
| Alanine | g/100g | 4.10 | 6.20 |
| Proline | g/100g | 3.00 | 6.00 |

| Parameter | Unit | Min. | Max |
|---|---|---|---|
| Tyrosine | g/100g | 2.50 | 4.50 |
| Valine | g/100g | 2.70 | 3.20 |
| Methionine | g/100g | 1.20 | 1.50 |
| Cystine | g/100g | 0.10 | 0.70 |
| Isoleucine | g/100g | 2.40 | 3.50 |
| Leucine | g/100g | 2.00 | 11.00 |
| Phenylalanine | g/100g | 3.00 | 5.20 |
| Lysine | g/100g | 1.20 | 1.60 |
| Tryptophan | g/100g | 0.20 | 0.50 |

| Free aminoacids | | | |
|---|---|---|---|
| Aspartic acid | g/100g | 0.070 | 0.160 |
| Glutamic acid | g/100g | 0.010 | 0.200 |
| Serine | g/100g | 0.010 | 0.180 |
| Glycine | g/100g | 0.050 | 0.200 |
| Histidine | g/100g | 0.020 | 0.170 |
| Arginine | g/100g | 0.250 | 1.800 |
| Threonine | g/100g | 0.100 | 0.210 |
| Alanine | g/100g | 0.230 | 1.700 |
| Proline | g/100g | 0.220 | 0.450 |
| Tyrosine | g/100g | 0.100 | 0.600 |
| Valine | g/100g | 0.200 | 0.700 |
| Methionine | g/100g | 0.030 | 0.280 |
| Cystine | g/100g | 0.010 | 0.170 |
| Isoleucine | g/100g | 0.180 | 0.500 |
| Leucine | g/100g | 0.500 | 2.300 |
| Phenylalanine | g/100g | 0.250 | 0.800 |
| Lysine | g/100g | 0.120 | 0.250 |
| Tryptophan | g/100g | 0.010 | 0.250 |

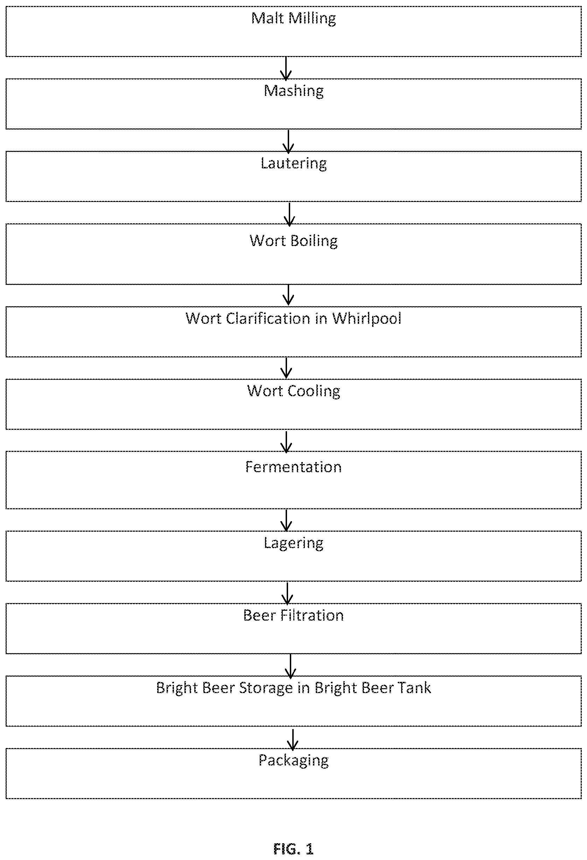

The methods of making a fermented beverage in accordance with this invention using the described enzymatically hydrolyzed vegetable protein can be otherwise conventional methods. In one aspect, the present invention relates to a method of brewing a fermented beverage in the form of beer that includes adding the enzymatically hydrolyzed vegetable protein at any time prior to, or during early stages of fermentation of a fermentable medium. A non-limiting method of brewing beer is shown in Fig. 1.

In another aspect of this invention, a combination of enzymatically hydrolyzed vegetable proteins made using this invention can be used to produce the fermented beverage. In yet another aspect, the protein or a combination of proteins can be combined with one or more carbohydrates for use in this invention. The carbohydrate used can be a starch or a starch derivative. Starch derivatives can include maltodextrins, dextrins, dextrose, syrups, or other derivatives. The syrups used can include high fructose corn syrup, high maltose corn syrup, glucose syrup or other similar derivatives. The starch used can be from one or more different sources including waxy maize, dent corn, high amylose corn, tapioca, wheat, potato, or other sources.

In aspects of the methods of the present invention, the vicinal diketones (the "VDKs" or "diacetyl") reduction time of a fermented beverage is shortened by approximately 12 to 48 hours, which consequently makes it possible to reduce the fermentation time or speed up the fermentation process as detailed above, as well as particularly improve the beer foam retention by adding the enzymatically hydrolyzed vegetable protein at any time prior to, or during early stages of fermentation of a fermentable medium to produce a cereal based fermented beverage, including, but not limited to beer.

In one aspect, the VDKs reduction time of a fermented beverage is shortened by approximately 12 to 42 hours by adding the enzymatically hydrolyzed vegetable protein. In one aspect, the VDKs reduction time of a fermented beverage is shortened by approximately 12 to 36 hours by adding the enzymatically hydrolyzed vegetable protein. In an aspect, the VDKs reduction time of a fermented beverage is shortened by approximately 12 to 30 hours by adding the enzymatically hydrolyzed vegetable protein. In another aspect, the VDKs reduction time of a fermented beverage is shortened by approximately 12 to 24 hours by adding the enzymatically hydrolyzed vegetable protein. In yet another aspect, the VDKs reduction time of a fermented beverage is shortened by approximately 12 to 18 hours by adding the enzymatically hydrolyzed vegetable protein. In an aspect, the VDKs reduction time of a fermented beverage is shortened by approximately 18 to 48 hours by adding the enzymatically hydrolyzed vegetable protein. In one aspect, the VDKs reduction time of a fermented beverage is shortened by approximately 24 to 48 hours by adding the enzymatically hydrolyzed vegetable protein. In another aspect, the VDKs reduction time of a fermented beverage is shortened by approximately 30 to 48 hours by adding the enzymatically hydrolyzed vegetable protein. In an aspect, the VDKs reduction time of a fermented beverage is shortened by approximately 36 to 48 hours by adding the enzymatically hydrolyzed vegetable protein. In one aspect, the VDKs reduction time of a fermented beverage is shortened by approximately 42 to 48 hours by adding the enzymatically hydrolyzed vegetable protein.

In another aspect, the VDKs reduction time of a fermented beverage is shortened by approximately 12 to 48 hours from the total brewing time of 14 days - i.e., 336 hours -- by adding the enzymatically hydrolyzed vegetable protein. In some aspects, the VDKs reduction time of a fermented beverage is shortened by approximately 1% to 30% based on the total brewing time by adding the enzymatically hydrolyzed vegetable protein. In other aspects, the VDKs reduction time of a fermented beverage is shortened by approximately 1% to 20% based on the total brewing time by adding the enzymatically hydrolyzed vegetable protein. In aspects, the VDKs reduction time of a fermented beverage is shortened by approximately 1% to 15% based on the total brewing time by adding the enzymatically hydrolyzed vegetable protein. In an aspect, the VDKs reduction time of a fermented beverage is shortened by approximately 1% to 10% based on the total brewing time by adding the enzymatically hydrolyzed vegetable protein. In other aspects, the VDKs reduction time of a fermented beverage is shortened by approximately 1% to 7% based on the total brewing time by adding the enzymatically hydrolyzed vegetable protein. In an aspect, the VDKs reduction time of a fermented beverage is shortened by approximately 1% to 5% based on the total brewing time by adding the enzymatically hydrolyzed vegetable protein.

In some aspects, the VDKs reduction time of a fermented beverage is shortened by approximately 3% to 30% based on the total brewing time by adding the enzymatically hydrolyzed vegetable protein. In some aspects, the VDKs reduction time of a fermented beverage is shortened by approximately 5% to 30% based on the total brewing time by adding the enzymatically hydrolyzed vegetable protein. In some aspects, the VDKs reduction time of a fermented beverage is shortened by approximately 10% to 30% based on the total brewing time by adding the enzymatically hydrolyzed vegetable protein. In some aspects, the VDKs reduction time of a fermented beverage is shortened by approximately 15% to 30% based on the total brewing time by adding the enzymatically hydrolyzed vegetable protein. In some aspects, the VDKs reduction time of a fermented beverage is shortened by approximately 20% to 30% based on the total brewing time by adding the enzymatically hydrolyzed vegetable protein.

In aspects, adding the enzymatically hydrolyzed vegetable protein accelerates the speed of the yeast metabolism by 1% to 30% without altering the characteristics - e.g., quality -- of the fermented beverage.

As used herein, "fermentable medium" means any cereal based medium capable of being fermented to yield a fermented beverage. In one aspect the fermentable medium is malt.

As used herein, "malt" means any cereal grain, particularly barley, steeped in water until it is sprouted and use in brewing and distilling. However, in alternate aspects the fermentable medium is wort. As used herein, "wort" means the liquor run-off after extracting a prepared solid material, such as cereal grain or malt, with hot water.

As used herein, "malting" means the process of converting barley or other cereal grains (e.g. rye, oats, rice and/or wheat) into malt, for use in brewing. Thus, malting comprises treating the grains so that they sprout, thus producing a "malted grain". Malting is typically comprised of steeping the grains, allowing the grains to sprout, and then drying the sprouted grains.

As used herein, "mashing" means a process for extracting the contents of solid raw materials (e.g., milled barley malt and solid adjuncts) into water and obtaining a soluble extract with the appropriate composition to produce a desired beer style. As used herein and detailed in Künze (KUNZE W (1996), Technology Brewing and Malting, International edition, Berlin, VLB. p. 206-209), "mashing-in" means a process describing the extremely through mixing of the grist (milled malt and adjunct) with water (mashing liquor) at prespecified mashing-in temperatures. Once the mashing liquor is obtained on mashing, optimum temperatures for enzymes which one wants to allow to act are attained, so rests at such different specific temperatures are kept, in such way that insoluble materials in grist like starch, cellulose, high molecular weight proteins and other are converted by enzymatic breakdown into soluble materials during mashing, like glucose, maltose, maltotriose, dextrins, aminoacids and other. Depending on the method in which the temperature is raised according different objectives for each specific beer style, mashing processes are classified into infusion - the entire mash is heated up, with appropriate rests, to the final mashing temperature - or decoction - the temperature is increased by removing part of the mash and boiled. By pumping it back to the remainder of the mash, the temperature of the total mash is increased to the next higher rest temperature.

As used herein, "lautering" means the brewing process in which the product produced in the mashing step -- i.e., the "mash" -- is separated into a clear liquid wort and the residual grain. Lautering may consist of three steps: mash out, recirculation and sparging.

As used herein, "sparging" means the brewing process where hot water is applied to the lautered grains to rinse out remaining wort.

As used herein, "whirlpool" means a process for separating solid particles in a hopped wort after boiling of the wort - i.e., "wort boiling". The whirlpool step may include clarification of the wort.

As used herein, "wort cooling" means cooling the wort sufficiently - i.e., to fermentation temperatures -- before yeast is added during the fermentation step.

As used herein, "fermentation" means the conversion of carbohydrates to alcohols and carbon dioxide or organic acids using yeast under anaerobic conditions, to produce a fermented beverage such as beer.

As used herein, an "early stage" of fermentation is within 24 hours of the start of filling a fermentation vessel.

In one aspect of the method of the invention, the enzymatically hydrolyzed vegetable protein is added to the fermentable medium before or during the mashing step. In another aspect, the enzymatically hydrolyzed vegetable protein is added to the fermentable medium before or during the lautering step. In yet another aspect, the enzymatically hydrolyzed vegetable protein is added to the fermentable medium before or during sparging during the lautering step. In one aspect, the enzymatically hydrolyzed vegetable protein is added to the fermentable medium before or during the wort boiling step. In yet another aspect, the enzymatically hydrolyzed vegetable protein is added to the fermentable medium before or during whirlpool step. In an aspect, the enzymatically hydrolyzed vegetable protein is added to the fermentable medium before or during the wort cooling step. In yet another aspect, the enzymatically hydrolyzed vegetable protein is added to the fermentable medium before or during the fermentation step. In yet another aspect, the enzymatically hydrolyzed vegetable protein is added to the fermentable medium during an early stage of the fermentation step.

In some aspects, the enzymatically hydrolyzed vegetable protein is added to the fermentable medium at one or more steps of the method of brewing a fermented beverage. In one aspect, the enzymatically hydrolyzed vegetable protein is added to the fermentable medium during the mash and the lautering steps. In another aspect, the enzymatically hydrolyzed vegetable protein is added to the fermentable medium during the mash and the wort boiling steps. In yet another aspect, the enzymatically hydrolyzed vegetable protein is added to the fermentable medium during the mash and the whirlpool steps. In another aspect, the enzymatically hydrolyzed vegetable protein is added to the fermentable medium during the mash and early fermentation steps. In one aspect, the enzymatically hydrolyzed vegetable protein is added to the fermentable medium during the lautering and wort boiling steps. In an aspect, the enzymatically hydrolyzed vegetable protein is added to the fermentable medium during the lautering and whirlpool steps. In yet another aspect, the enzymatically hydrolyzed vegetable protein is added to the fermentable medium during the lautering and during the early stage of the fermentation steps. In one aspect, the enzymatically hydrolyzed vegetable protein is added to the fermentable medium during the wort boiling and the whirlpool steps. In yet another aspect, the enzymatically hydrolyzed vegetable protein is added to the fermentable medium during the wort boiling and the early stage of the fermentation steps. In yet another aspect, the enzymatically hydrolyzed vegetable protein is added to the fermentable medium during the whirlpool and the early stage of the fermentation steps.

The enzymatically hydrolyzed vegetable protein may be added to the fermentable medium prior to or in the early stages of fermentation in any amount effective to shorten the time to reduction of the level of vicinal diketones to an acceptable level which consequently makes it possible to reduce the fermentation time or improve the cellar efficiency, as well as particularly improve the beer foam retention.

In one aspect, the enzymatically hydrolyzed vegetable protein is added to the fermentable medium at a sufficient rate to achieve a concentration ranging from about 1 to about 1,000 g/hectoliters(hL) on a cast wort volume basis when added at the mashing step. In another aspect, the enzymatically hydrolyzed vegetable protein is added to the fermentable medium at a sufficient rate to achieve a concentration ranging from about 1 to about 750 g/hL on a cast wort volume basis when added at the mashing step. In yet another aspect, the enzymatically hydrolyzed vegetable protein is added to the fermentable medium at a sufficient rate to achieve a concentration ranging from about 1 to about 500 g/hL on a cast wort volume basis when added at the mashing step. In an aspect, the enzymatically hydrolyzed vegetable protein is added to the fermentable medium at a sufficient rate to achieve a concentration ranging from about 1 to about 250 g/hL on a cast wort volume basis when added at the mashing step. In another aspect, the enzymatically hydrolyzed vegetable protein is added to the fermentable medium at a sufficient rate to achieve a concentration ranging from about 1 to about 100 g/hL on a cast wort volume basis when added at the mashing step.

In one aspect, the enzymatically hydrolyzed vegetable protein is added to the fermentable medium at a sufficient rate to achieve a concentration ranging from about 1 to about 30 g/hL on a cast wort volume basis when added at the mashing step. In another aspect, the enzymatically hydrolyzed vegetable protein is added to the fermentable medium at a sufficient rate to achieve a concentration ranging from about 1 to about 25 g/hL on a cast wort volume basis when added at the mashing step. In yet another aspect, the enzymatically hydrolyzed vegetable protein is added to the fermentable medium at a sufficient rate to achieve a concentration ranging from about 1 to about 20 g/hL on a cast wort volume basis when added at the mashing step. In an aspect, the enzymatically hydrolyzed vegetable protein is added to the fermentable medium at a sufficient rate to achieve a concentration ranging from about 1 to about 15 g/hL on a cast wort volume basis when added at the mashing step. In another aspect, the enzymatically hydrolyzed vegetable protein is added to the fermentable medium at a sufficient rate to achieve a concentration ranging from about 1 to about 10 g/hL on a cast wort volume basis when added at the mashing step. In yet another aspect, the enzymatically hydrolyzed vegetable protein is added to the fermentable medium at a sufficient rate to achieve a concentration ranging from about 5 to about 30 g/hL on a cast wort volume basis when added at the mashing step. In another aspect, the enzymatically hydrolyzed vegetable protein is added to the fermentable medium at a sufficient rate to achieve a concentration ranging from about 10 to about 30 g/hL on a cast wort volume basis when added at the mashing step. In yet another aspect, the enzymatically hydrolyzed vegetable protein is added to the fermentable medium at a sufficient rate to achieve a concentration ranging from about 20 to about 30 g/hL on a cast wort volume basis when added at the mashing step.

In one aspect, the enzymatically hydrolyzed vegetable protein is added to the fermentable medium at a sufficient rate to achieve a concentration ranging from about 1 to about 1000 g/hL. In an aspect, the enzymatically hydrolyzed vegetable protein is added to the fermentable medium at a sufficient rate to achieve a concentration ranging from about 1 to about 750 g/hL. In yet another aspect, the enzymatically hydrolyzed vegetable protein is added to the fermentable medium at a sufficient rate to achieve a concentration ranging from about 1 to about 500 g/hL. In another aspect, the enzymatically hydrolyzed vegetable protein is added to the fermentable medium at a sufficient rate to achieve a concentration ranging from about 1 to about 250 g/hL. In an aspect, the enzymatically hydrolyzed vegetable protein is added to the fermentable medium at a sufficient rate to achieve a concentration ranging from about 1 to about 100 g/hL. In another aspect, the enzymatically hydrolyzed vegetable protein is added to the fermentable medium at a sufficient rate to achieve a concentration ranging from about 1 to about 30 g/hL. In yet another aspect, the enzymatically hydrolyzed vegetable protein is added to the fermentable medium at a sufficient rate to achieve a concentration ranging from about 1 to about 20 g/hL. In an aspect, the enzymatically hydrolyzed vegetable protein is added to the fermentable medium at a sufficient rate to achieve a concentration ranging from about 1 to about 10 g/hL. In another aspect, the enzymatically hydrolyzed vegetable protein is added to the fermentable medium at a sufficient rate to achieve a concentration ranging from about 1 to about 5 g/hL.

In some aspects, the volume associated with each of the enzymatically hydrolyzed vegetable protein concentrations described above is based on the volume associated with the one or more steps of the method of brewing a fermented beverage where the enzymatically hydrolyzed vegetable protein is added.

In one aspect, the fermentation medium will typically be essentially free of ammonium ions, except any that may be present in, or generated by, other ingredients of the fermentation medium.

The enzymatically hydrolyzed vegetable protein in the method of this invention can be used in the brewing of beer (such as a Pilsner style lager) using brewer's yeast. Brewer's yeasts are well known in the brewing art. Brewing yeasts may be classed as "top-cropping" (or "top-fermenting") and "bottom-cropping" (or "bottom-fermenting"). Top-cropping yeasts float to the beer surface once fermentation is complete. A non-limiting example of a top-cropping yeast is *Saccharomyces cerevisiae,* also referred to as "ale yeast". Bottom-cropping yeasts are typically used to produce Lager-type beers. These yeasts ferment well at low temperatures. A non-limiting example of bottom-cropping yeast is *Saccharomyces pastorianus.*

Lager strains of *S. carlsbergensis* secrete an enzyme called melibiase, allowing them to hydrolyze melibiose, a disaccharide, into more fermentable monosaccharides.

Lager beer uses a process of cool fermentation, followed by maturation in cold storage such as a cellar or storeroom. The yeast typically used with Lager brewing is *Saccharomyces pastorianus.*

Other lager beers include the adjunct based American Lager. The adjunct based American Lager is similar in visual properties to the Pilsner style lagers, but the brewing process is different. Where the Pilsner style lagers are made from barley malt, water, yeast, and a comparatively large dose of hops, most adjunct based American Lagers use a fraction of the hops and a portion of the barley is replaced with sugars derived from corn and rice.

Suitable brewer's yeasts include strains of *Saccharomyces cerevisiae, Saccharomyces pastorianus,* and variants thereof. A non-limiting example of a brewer's yeast is a proprietary yeast strain sold under the designation Saflager available from Fermentis, a division of Société Industrielle Lesaffre, 137 rue Gabriel Péri, Marcq en Baroeul, France.

### EXAMPLES

Trials were performed according to the methods described below to compare Control brews with Test brews in which an enzymatically hydrolyzed vegetable protein prepared as described below was added according to following dosage rates, addition stages and wort original extracts described below in Table 2:

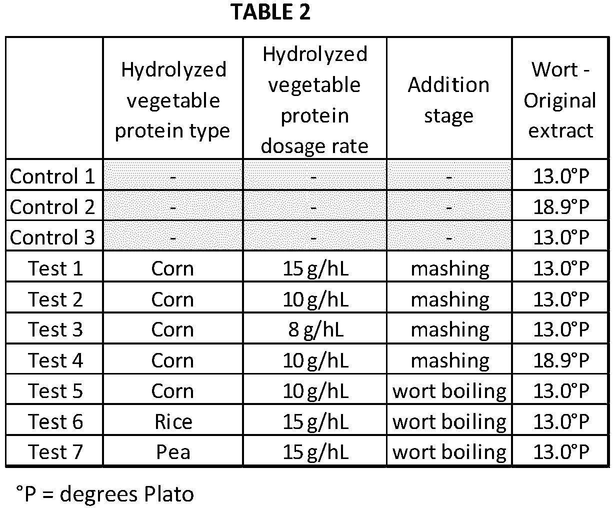

The Control brews did not receive dosage of the enzymatically hydrolyzed vegetable protein.

### Preparation of the Enzymatically Hydrolyzed Corn Protein:

| MATERIALS: | |
|---|---|
| Protein slurry | 99.586 parts by weight |
| Sodium phosphate | 0.302 parts by weight |
| Proteases | 0.075 parts by weight |
| Alpha-amylase | 0.019 parts by weight |
| Caustic soda | Quantity enough to adjust pH as described below |
| Hydrochloric acid | Quantity enough to adjust pH as described below |

### MANUFACTURING PROCEDURE:

1) The vegetable protein slurry is prepared by adding sufficient corn gluten meal parts to water to prepare a slurry having 35% dry solids.
2) The pH is adjusted to 5.5 with hydrochloric acid and an α-amylase (available from Novozymes A/S, Bagsvaerd, Denmark, as BAN 480L) is added into the reactor.
3) The protein slurry is heated in the reactor to a final temperature of 90°C and kept at the temperature for an hour under agitation.
4) The pH is then adjusted to 7.0 with caustic soda and sodium phosphate and two proteases available from Novozymes A/S (ALCALASE 2.4L and FLAVOURZYME 1000L) are added to the reactor.
5) The hydrolysis reaction is performed during 20 hours at 57°C in order to reach a minimal Free Amino Nitrogen of 10 mg/ml in the final product.
6) The enzymes are then inactivated through pH adjustment to 4.0 or through holding at an inactivation temperature at 95_{°}C.
7) The product is dried to 8% moisture using a spray dryer, flash dryer or drum dryer.
8) The dried product is packaged.

### Preparation of Control and Test Brews for Enzymatically Hydrolyzed Corn Protein:

The preparation of the control and test brews for the enzymatically hydrolyzed corn protein is detailed in Table 3:

**TABLE 3**

| | |
|---|---|
| Beer style | American style Lager (according to Brewers Association): 55% barley malt + 45% high maltose syrup - Original extract: 11.5 °P - Apparent extract: 2.2°P - Alcohol cont.: 4.9 % by vol. - Bitterness: 8.7 BU - Color: 5.5 EBC |
| Malt milling | 2 rolls mill (1.5 mm rolls gap) |
| | Malt features: 2 rows barley - Scarlett (50%) + Shakira (10%) + Paine (22%) + Sylphide (18%) - Extract fine ground: 80.6% - β-glucans content: 161 mg/L - Protein content: 10.7% - Kolbach Index: 39.9% - FAN: 161 mg/L |
| Mashing | Pilsner type 2 rows barley malt: 10.8 kg (= 8.7701 kg/hL) - mash pH: 5.4 - 5.6 - adjustment of 0.36 hL water with 0.0045 kg of lactic acid at 50% w/w - Infusion mashing process: start at 44°C => 8 min => 52°C (10 min rest) => 16 min => 68°C (20 min rest) => 10 min => 78°C (start lautering) |
| Lautering | First run: 0.26 to 0.30 hL at 11.8 - 12.8°P + 2 Sparging waters - Last run extract < 2.0°P => Wort Kettle: 1.08 hL at 7.5 - 8.0°P |
| Wort Boiling | 7.5% evaporation rate - 55-60 min boiling time - High maltose syrup (MorSweet ^{™} brand 1557) dosage 10 min before boiling end: 8.2 kg (= 6.6505 kg/hL) - Hop dosage: 0.0028 kg α-acids/hL => 0.020 kg Nugget 11.0% α-acids at 5 min boiling + 0.065 kg Saazer 3.4% α-acids 15 min before boiling end - Caramel dosage: 0.0044 kg (= 0.0036 kg/hL) - Knock-out vol.: 1.05 hL - Knock-out extract: 13.5°P |
| Wort Clarification In Whirlpool | 1 min wort recirculation - 15 min rest |
| Wort cooling | Wort temperature: 12°C - Cooling time: 15 - 20 min - Aeration: pure oxygen - Cold wort volume: 1.01 hL |
| Fermentation | Yeast strain: Fermentis Saflager 34/70 - yeast slurry dosage: 830 g - Temp. 12°C - until app. extract 8 - 6°C => Temp. 14°C - until app. extract 4.5 - 3.5°P => Temp. 0°C when diacetyl < 0.10 ppm - Fermentation time: 144 - 168 hours (6-7 days) |
| Lagering | Temp.: 0°C - Lagering time: 144 - 264 hours (6 - 11 days) |
| Beer filtration | 0.23 m² coated screen filter - Filter aids: pre-coat layer with 1.0 kg/m² of Hyflo Super-Cel - Second pre-coat layer with 1.7 kg/m² of Diactiv 14 + 0.3 kg/m² of cellulose fiber - colloidal stabilization: PVPP 5 g/hL - Beer turbidity: 0.2 - 0.8 EBC |
| Bright Beer Storage in Bright Beer Tank | Carbonation adjustment: 0.55 to 0.60 % w/w - Original extract adjustment to 11.5°P using degassed water - antioxidant: 1.5 g/hL sodium metabisulphite (INS 223) |
| Packaging | CO₂ counterpressure glass bottles filling with manual closing for crown corks - Pasteurization: 10 - 14 PU |

### Preparation of Control and Test Brews for Enzymatically Hydrolyzed Rice and Pea Proteins:

The preparation of the control and test brews for the enzymatically hydrolyzed rice and pea proteins is detailed in Table 4:

**TABLE 4**

| | |
|---|---|
| Beer style | Typical American mainstream Lager beer (according to Brewers Association: American style Lager): 55% barley malt + 45% high maltose syrup - Original extract: 10-12°P - Apparent extract: 1.5-3.5°P - Alcohol content: 3.8-5.0 % by vol.- Bitterness: 5-15 BU - Color: 4-12 EBC |
| Malt milling | 2 rolls mill (1.5 mm rolls gap) |
| Mashing | Pilsener type 2 rows barley malt: 16.2 kg (= 8.6562 kg/hL) - mash pH: 5.4 - 5.6 - adjustment of 0.54 hL water with 0.008 kg of lactic acid at 50% w/w - Infusion mashing process: start at 44°C => 8 min => 52°C (10 min rest) => 16 min => 68°C(20 min rest) => 10 min => 78°C (start lautering) |
| Lautering | First run: 0.85 to 0.95 hL at 11.0 - 11.6°P + 2 Sparging waters - Last run extract <1.5°P => Wort Kettle: 1.64 hL at 7.0 - 7.5°P |
| Wort Boiling | 7.5% evaporation rate - 55-60 min boiling time - High maltose syrup (HIBREW1441) dosage 10 min before boiling end: 12.5 kg (= 6.6505 kg/hL) - Hop dosage: 0.0028 kg α-acids/hL => 0.023 kg Nugget 11.0% α-acids at 5 min boiling + 0.075 kg Saazer 3.4% α-acids 15 min before boiling end - Caramel dosage: 0.0068 kg (= 0.0036 kg/hL) - Knockout volume: 1.60 hL - Knock-out extract: 13.5°P + |
| Wort Clarification In Whirlpool | 5 min wort recirculation - 15 min rest |
| Wort cooling | Wort temperature: 10°C - Cooling time: 15 - 20 min - Aeration: pure oxygen - Cold wort volume: 1.01 hL |
| Fermentation | Yeast strain: Fermentis Saflager 34/70 - Yeast slurry dosage: 0.7 kg - Temp. 12°C -until app. extract 8 - 6°C => Temp. 14°C - until app. extract 4.5 - 3.5°P => Temp. 0°C when diacetyl < 0.10 ppm - Fermentation time: 144 - 216 hrs (6-9 days) |
| Lagering | Temp.: 0°C - Lagering time: 144 - 264 hrs (6 - 11 days) |
| Beer filtration | 0.23 m² coated screen filter - Filter aids: pre-coat layer with 1.0 kg/m² of Hyflo Super-Cel - Second pre-coat layer with 1.7 kg/m² of Diactiv 14 + 0.3 kg/m² of cellulose fiber - Continuous dosing: same as 2nd pre-coat dosage, if necessary - Beer turbidity: < 0.8 EBC - PVPP 4 g/hL - Sodium metabisulfite 1.5 g/hL |
| Bright Beer Storage in Bright Beer Tank | Carbonation adjustment: 0.58 to 0.60 % w/w - Original extract adjustment to 11.4°P using degassed water - No foaming additives utilization |
| Packaging | Automated glass bottles filling with crown corks closing - Pasteurization: 10 - 14 PU |

### Barley malt quality:

### Argentinian malt - 2 rows barley

Barley varieties blend: Scarlett (70%) + Shakira (9%) + Paine (9%) + Sylphide (8%) + Prestige (4%) The barley malt quality is reflected in Table 5:

**TABLE 5**

| Assay | Result | Specification | Unit |
|---|---|---|---|
| Moisture | 4.0 | Max. 5.0 | % |
| Extract - fine ground | 81.8 | Min. 80.5 | % |
| Extract difference | 1.2 | Max. 1.8 | % |
| Saccharification time | 12 | Max. 15 min | Minutes |
| Viscosity 8.6% | 1.58 | Max. 1.58 | cP |
| Protein | 10.2 | 9.5 a 11.0 | u |
| Soluble nitrogen | 656 | Min. 600 | mg/ 100 g malt |
| Kalbach Index | 40 | Min. 36 | % |
| Wort color | 6.0 | 6.0 - 7.5 | EBC |
| FAN | 136 | Min. 130 | mg/ 100 g malt |
| Diastatic power | 301 | Min. 250 | WK |
| Friability | 87 | 80- 87 | % |

### Results:

### Wort parameters:

Control 1 and Test 1 presented similar results on wort sugar distribution as shown in Table 6.

**TABLE 6**

| | Unit | Control 1 | Test 1 |
|---|---|---|---|
| Sugar distr. DP1 | % | 8.29 | 8.63 |
| Sugar distr. DP2 | % | 44.23 | 46.33 |
| Sugar distr. DP3 | % | 19.51 | 17.65 |
| Sugar distr. DP4 | % | 3.93 | 3.37 |
| Sugar distr. DP5 | % | 1.97 | 2.15 |
| Sugar distr. DP6 | % | 2.22 | 2.47 |
| Sugar distr. DP7 | % | 1.89 | 1.99 |
| Sugar distr. DP8 | % | 1.50 | 1.53 |
| Sugar distr. DP9 | % | 1.34 | 1.30 |
| Sugar distr. DP10+ | % | 14.60 | 13.88 |
| Fructose | % | 0.53 | 0.69 |

Control 3 and Tests 6 & 7 also presented similar results on wort sugar distribution, showing no significant difference on wort quality as shown in Table 7.

**TABLE 7**

| | Unit | Control 3 | Test 6 | Test 7 |
|---|---|---|---|---|
| | | | H. Rice Prot. | H. Pea Prot. |
| Sugar distr. DP1 | % | 9.02 | 7.58 | 9.02 |
| Sugar distr. DP2 | % | 44.36 | 44.14 | 44.36 |
| Sugar distr. DP3 | % | 18.54 | 18.83 | 18.54 |
| Sugar distr. DP4 | % | 3.70 | 3.91 | 3.70 |
| Sugar distr. DP5 | % | 2.07 | 1.90 | 2.07 |
| Sugar distr. DP6 | % | 2.22 | 2.11 | 2.22 |
| Sugar distr. DP7 | % | 1.78 | 1.72 | 1.78 |
| Sugar distr. DP8 | % | 1.47 | 1.63 | 1.47 |
| Sugar distr. DP9 | % | 1.52 | 1.66 | 1.52 |
| Sugar distr. DP10+ | % | 14.79 | 15.95 | 14.79 |
| Fructose | % | 0.53 | 0.57 | 0.53 |

### Fermentation parameters:

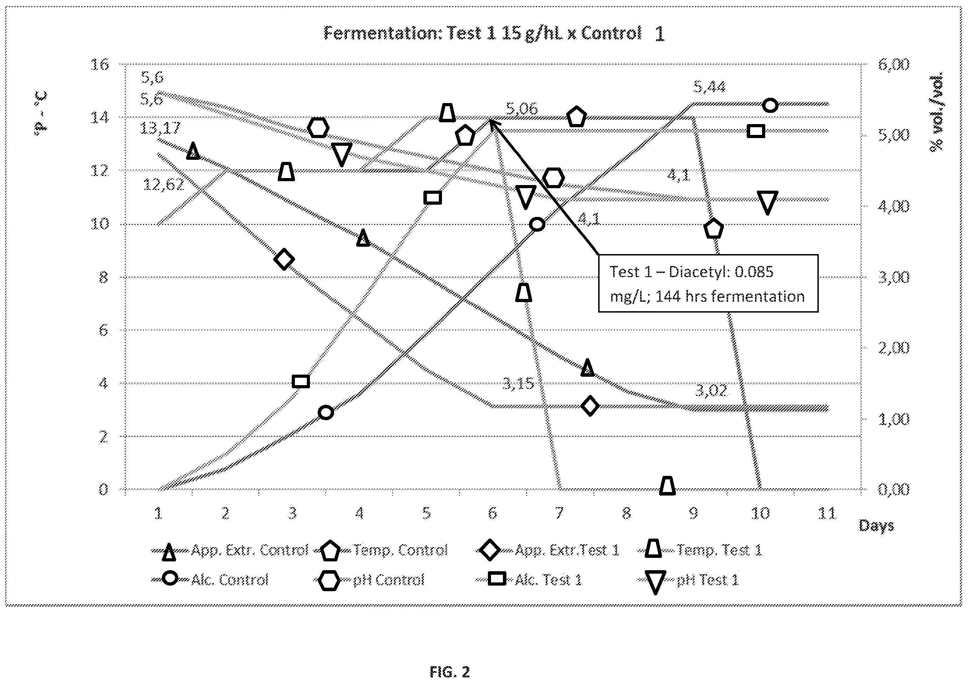

The target value for VDKs for Test 1 (15 g/hL of the enzymatically hydrolyzed corn protein at 13.0°P Wort-original extract) was achieved 72 hours faster than Control 1 as shown in Fig. 2.

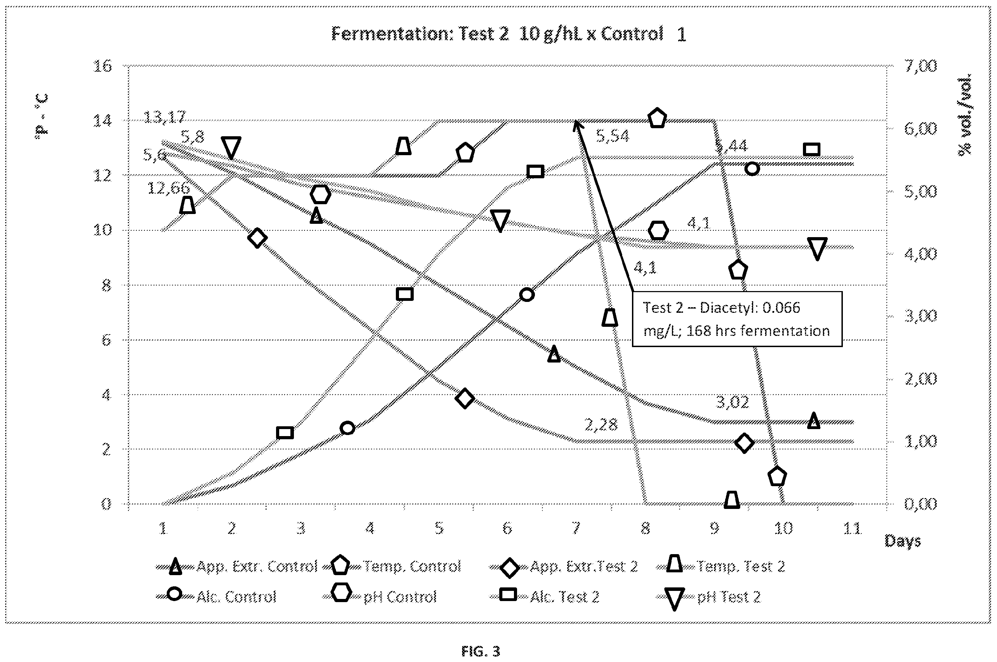

The target value for VDKs for Test 2 (10 g/hL of the enzymatically hydrolyzed corn protein at 13.0°P Wort-original extract) was achieved 48 hours faster than Control 1 as shown in Fig. 3.

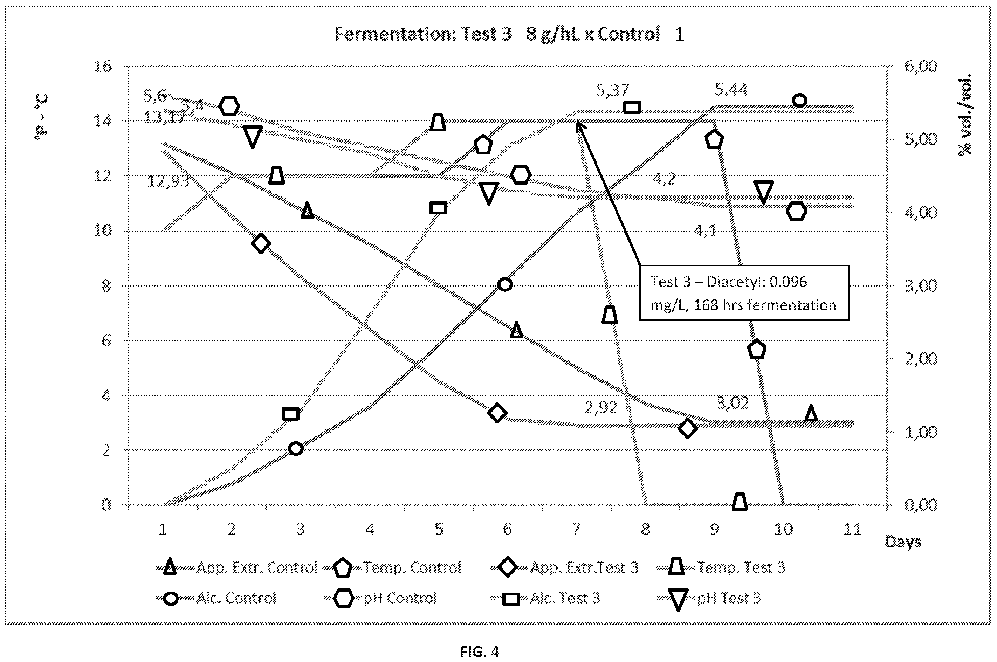

The target value for VDKs for Test 3 (8 g/hL of the enzymatically hydrolyzed corn protein at 13.0°P Wort-original extract) was achieved 48 hours faster than Control 1 as shown in Fig. 4.

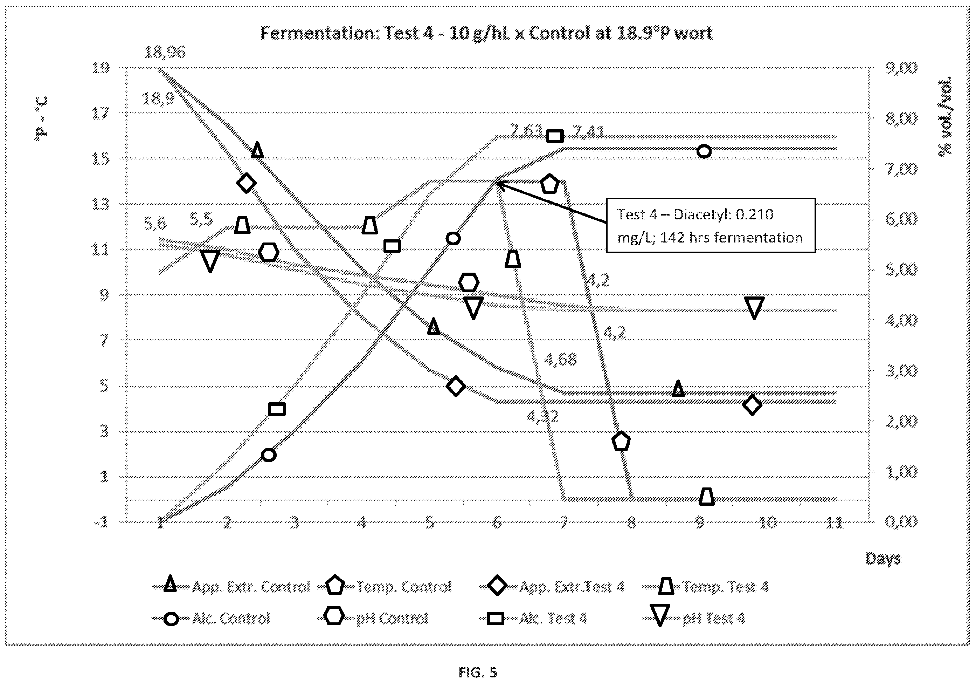

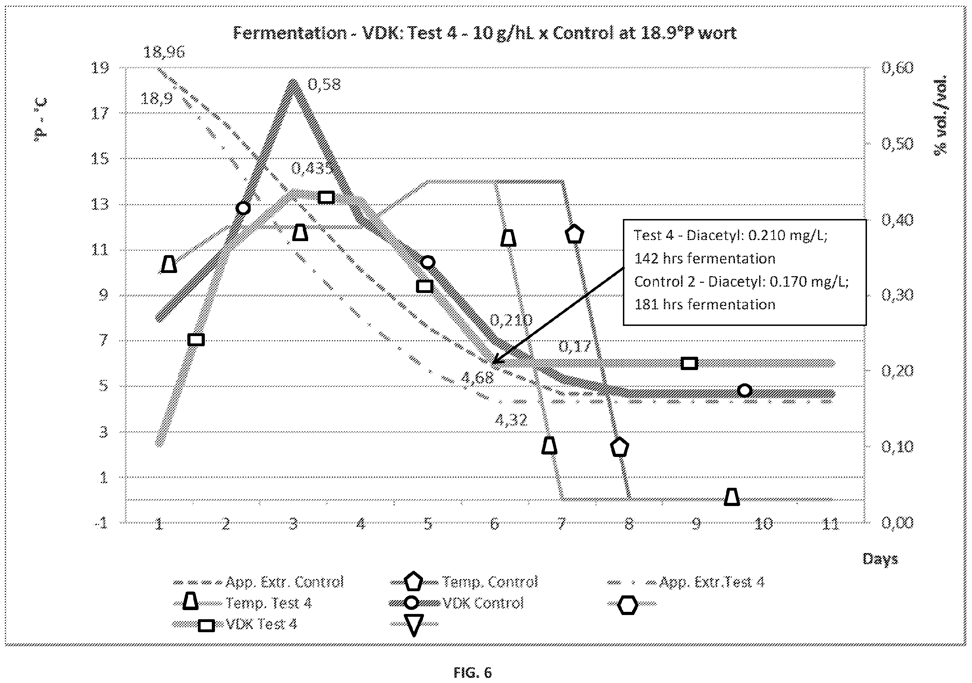

The target value for VDKs for Test 4 (10 g/hL of the enzymatically hydrolyzed corn protein at 18.9°P Wort-original extract) was achieved 38 hours faster than Control 2 as shown in Fig. 5. A lower VDK peak and faster diacetyl reduction was obtained for Test 4 (10 g/hL of the enzymatically hydrolyzed corn protein at 18.9°P Wort-original extract) compared to Control 2 (at 18.9°P Wort-original extract) as shown in Fig. 6.

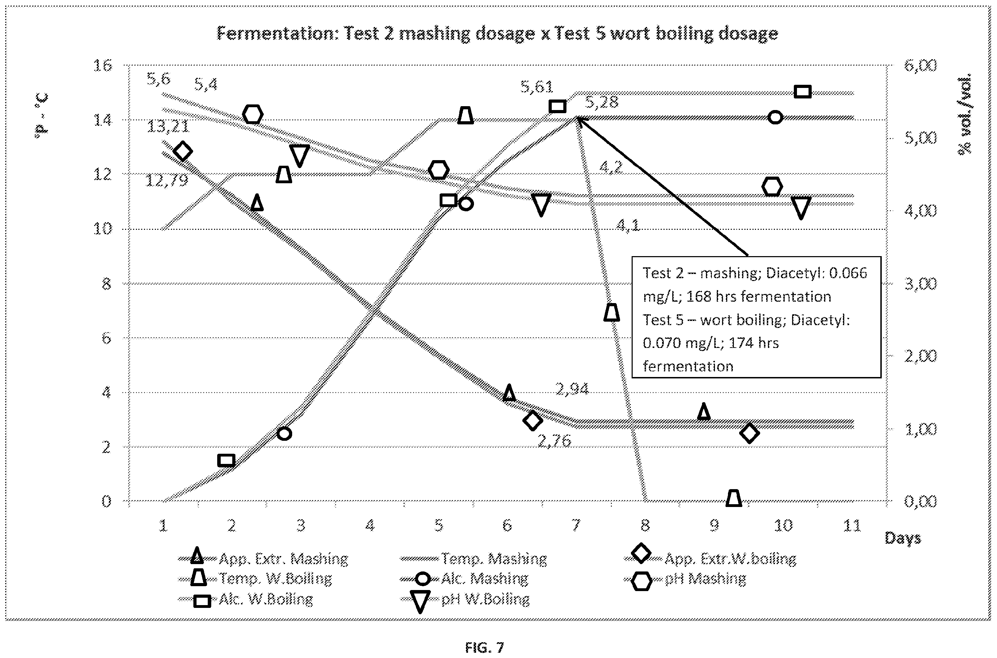

As shown in Fig. 7, no significant difference in fermentation performance was detected based on a comparison of Test 5 (dosage point on wort boiling) and Test 2 (dosage on malt mashing).

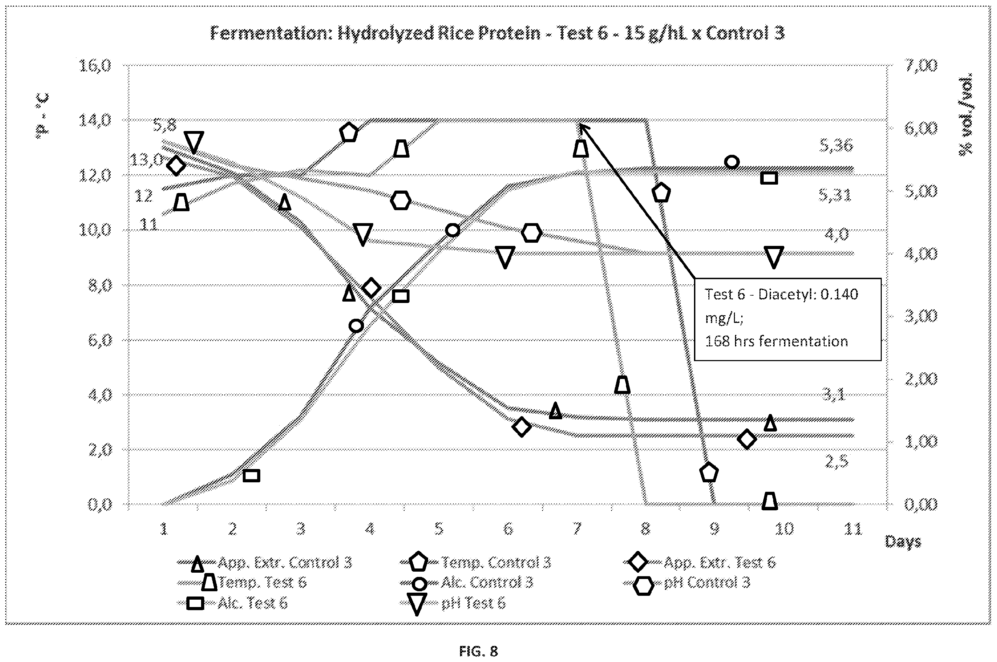

The target value for VDKs for Test 6 (15 g/hL of the enzymatically hydrolyzed rice protein) was achieved 24 hours faster than Control 3 as shown in Fig. 8.

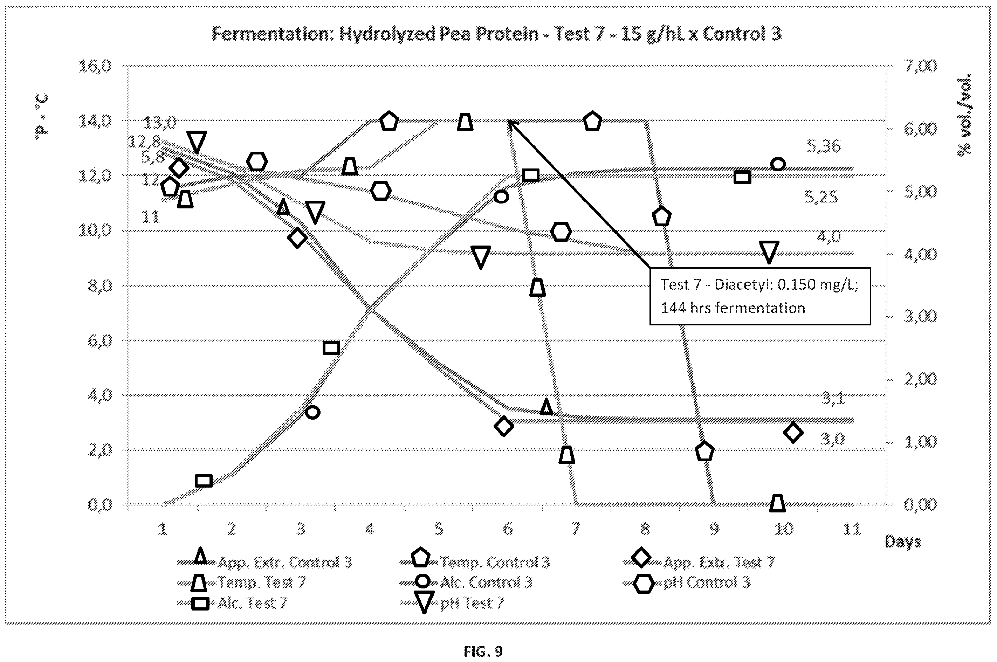

The target value for VDKs for Test 7 (15 g/hL of the enzymatically hydrolyzed pea protein) was achieved 48 hours faster than Control 3 as shown in Fig. 9.

### Quality evaluation - wort and beer parameters:

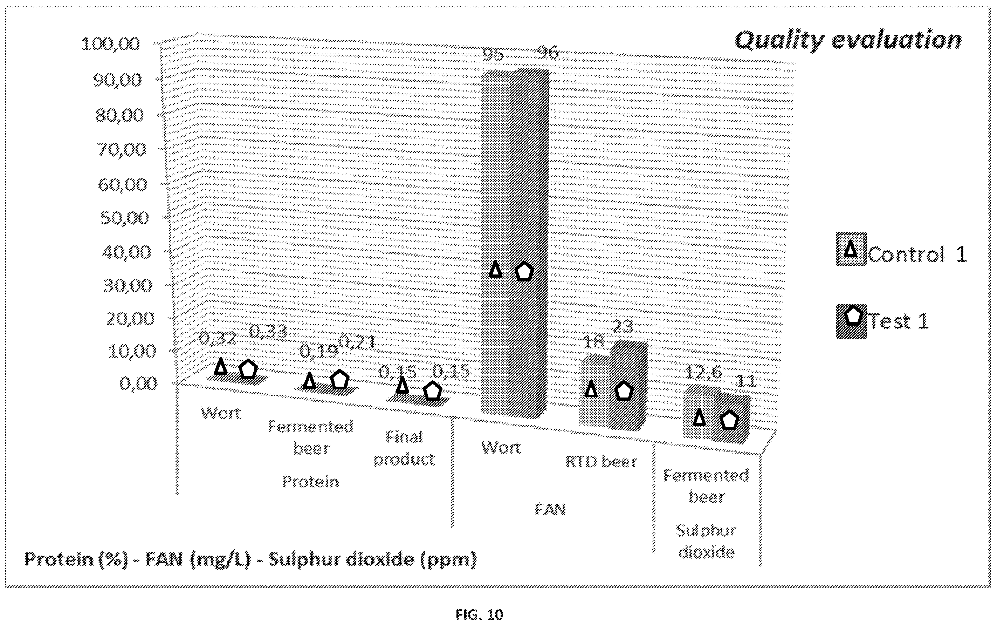

As shown in Fig. 10, Control 1 and Test 1 have similar results and thus, beer quality was not negatively affected even for the faster fermentation time for the Test 1 brew.

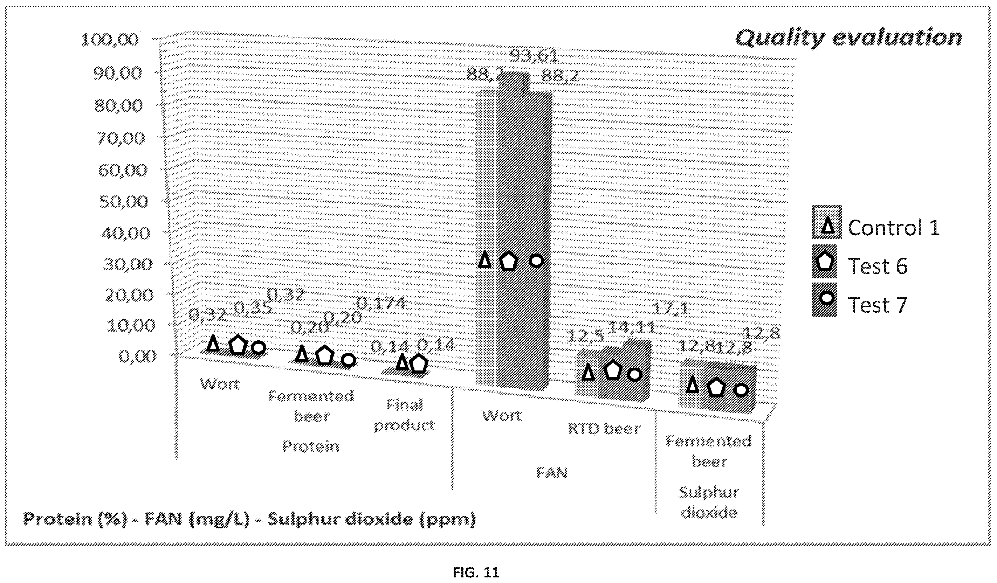

As shown in Fig. 11, Control 3 and Tests 6 & 7 have similar results and thus, beer quality was not negatively affected by hydrolyzed vegetable protein dosage.

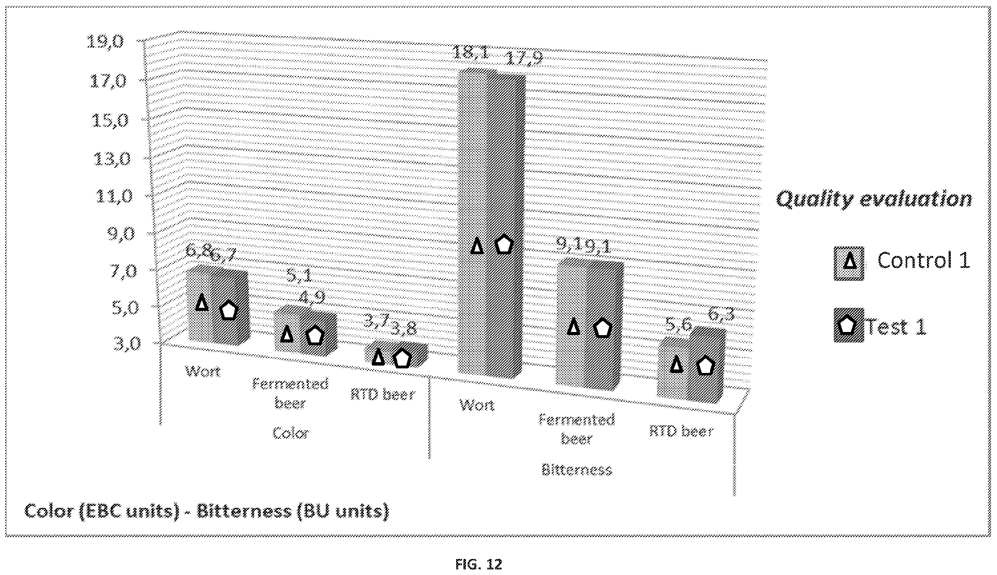

As shown in Fig. 12, no significant color or bitterness differences were detected for wort and beer when comparing Test 1 to Control 1.

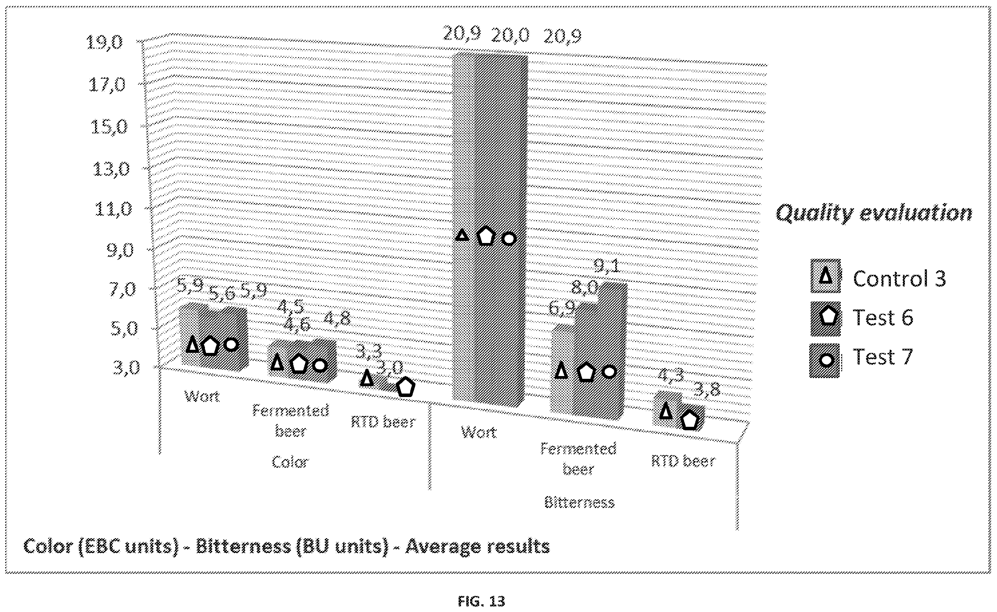

As shown in Fig. 13, no significant color or bitterness differences were detected for wort and beer when comparing Control 3 and Tests 6 & 7.

### Quality evaluation - Diacetyl content:

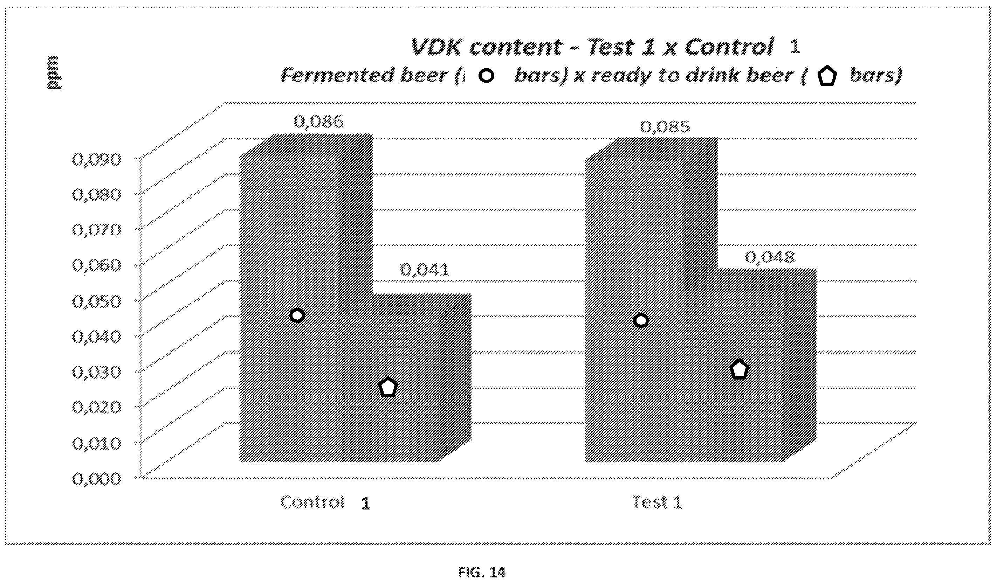

As shown in Fig. 14, Control 1 and Test 1 presented similar diacetyl contents, but the target value for VDKs was achieved by the Test 1 brew approximately 72 hours earlier than Control 1 and thus, positively affects the cellar efficiency and beer output. In Fig. 14, the bar to the left is the diacetyl on fermented beer and the bar to the right is the diacetyl on final or "ready to drink" product.

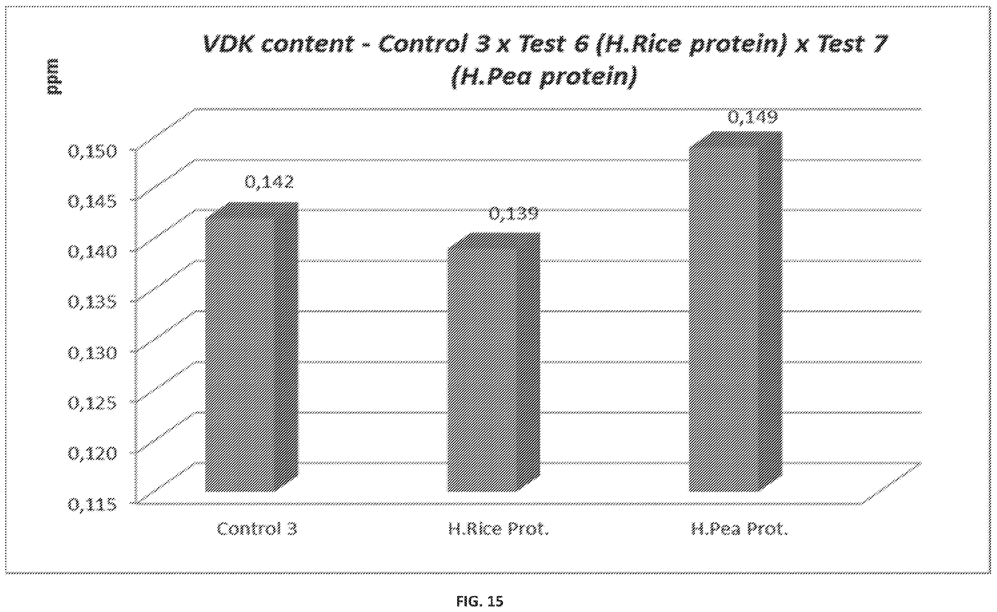

As shown in Fig. 15, Control 3 and Tests 6 & 7 also presented similar diacetyl contents, but the target value for VDKs was achieved by Test 6 brew approximately 24 hours and 48 hours earlier than Control 3, respectively.

### Quality evaluation - beer parameters:

As shown in Table 8, Control 1 and Test 1 presented similar results and thus, the enzymatically hydrolyzed corn protein addition did not negatively influence the typical beer quality.

**TABLE 8**

| | Quality parameter | Unit | Control 1 | Test 1 |
|---|---|---|---|---|
| Turbidity | Fermented beer - 90° | EBC | 39.20 | 45.80 |
| | Fermented beer - 25° | EBC | 71.30 | 85.20 |
| | Final product - 90° | EBC | 0.24 | 0.41 |
| | Final product - 25° | EBC | 0.16 | 0.42 |
| Final product | Original extract | °P | 11.7 | 11.9 |
| | Apparent extract | °P | 1.9 | 2.1 |
| | Alcohol content | % vol. | 5.2 | 5.2 |
| | App. Degree Ferm. | % | 84.9 | 83.4 |
| | Specific gravity | | 1.00719 | 1.00803 |
| | pH | | 4.2 | 4.2 |

As shown in Table 9, Control 3 and Tests 6 & 7 also presented results consistent with the results for Control 1 and Test 1 and thus, the addition of the enzymatically hydrolyzed rice and pea proteins did not negatively influence the typical beer quality.

**TABLE 9**

| | Quality parameter | Unit | Control 3 | Test 6 | Test 7 |
|---|---|---|---|---|---|
| Turbidity | Final product - 90° | EBC | 0.80 | 0.65 | 0.48 |
| | Final product - 25° | EBC | 0.19 | 0.08 | 0.37 |
| Final product | Original extract | °P | 10.4 | 9.8 | 11.5 |
| | Apparent extract | °P | 2.1 | 2.0 | 2.3 |
| | Alcohol content | % vol. | 4.4 | 4.0 | 4.9 |
| | App. Degree Ferm. | % | 80.8 | 79.9 | 80.7 |
| | pH | | 4.0 | 4.2 | 4.0 |

### Foam quality - retention time evaluation (Analytica EBC method - Nibem foam tester):

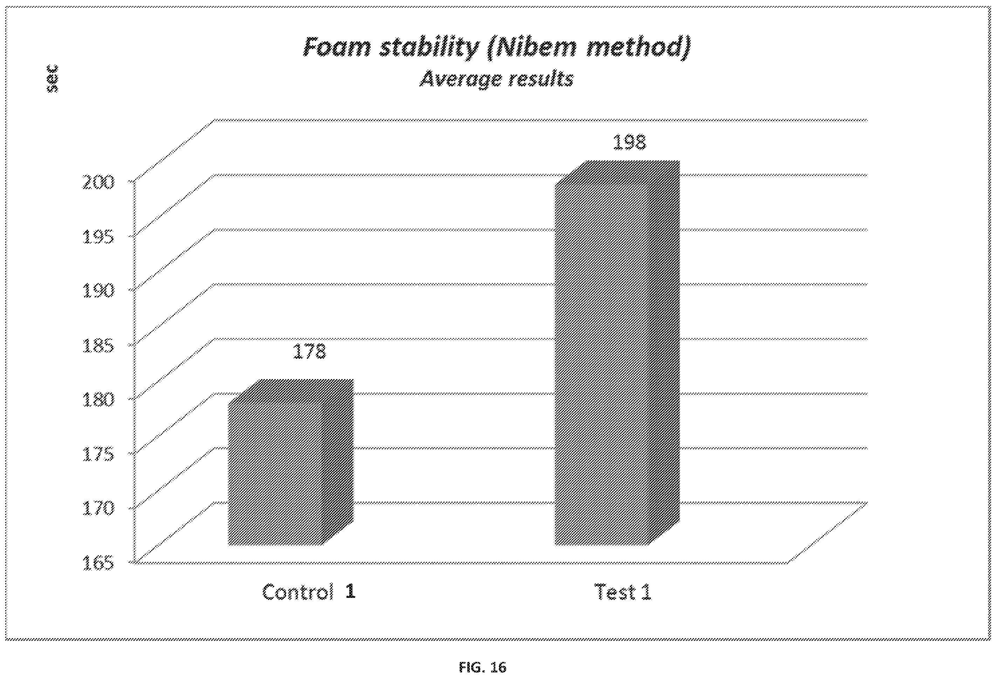

As shown in Fig. 16, head retention in Test 1 brew was 20 seconds longer than Control 1 brew or 11.4% higher, and thus, addition of the enzymatically hydrolyzed vegetable protein utilization positively influenced the foam quality in the Test 1 brew.

### Foam quality - sensory evaluation:

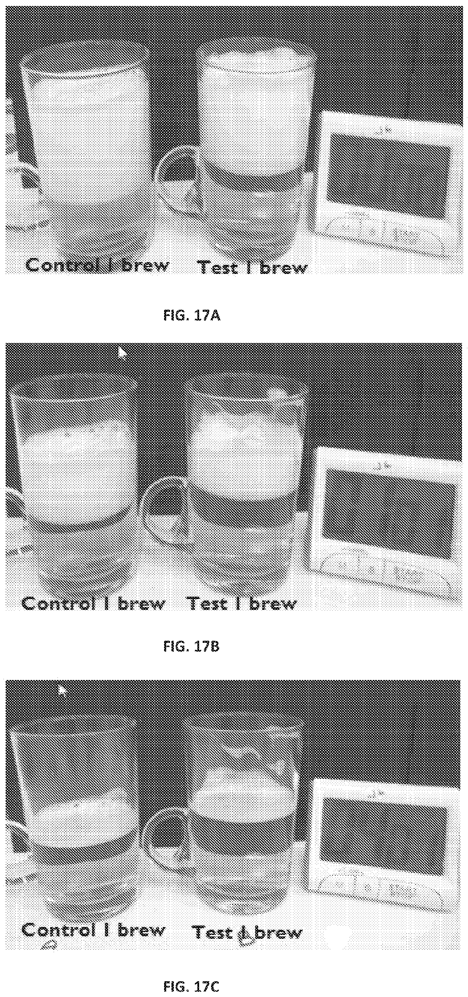

As shown in Figs. 17a, 17b, and 17c, the Test 1 brew presented better foam quality expressed as good head formation, small bubbles and lacing formation compared with the Control 1 brew and thus, confirmed that addition of the enzymatically hydrolyzed vegetable protein utilization positively influenced the foam quality in Test 1 brew. Fig. 17a shows the Test 1 and Control 1 brews after 8 seconds; Fig. 17b shows the Test 1 and Control 1 brews after 1 minute, 1 second; and Fig. 17c shows the Test 1 and Control 1 brews after 4 minutes, 1 second.

## Claims

1. A method for preparing a fermented beverage comprising:
a. obtaining an enzymatically hydrolyzed vegetable protein, wherein the vegetable protein is from vegetable sources selected from dent corn, waxy corn, high amylose corn, rice, waxy rice, pea, chick pea, yellow pea, navy beans, fava beans, lentils and/or wheat;
b. after step a, combining the enzymatically hydrolyzed vegetable protein with a fermentable medium;
c. fermenting the fermentable medium to form a fermented beverage; wherein the fermented beverage is beer; wherein
the enzymatically hydrolyzed vegetable protein is obtained by slurrying the vegetable protein source in a major amount by weight of water, so that the vegetable protein source is present at from 2% to 50% by weight, adjusting the pH to from 5.0 to 6.5 with organic or inorganic acids or with bases, adding one or more amylases to the vegetable protein source slurry, heating the vegetable protein source slurry in a reactor under controlled conditions to a temperature between about 50°C to 90°C with sufficient agitation to homogenize the vegetable protein source and held at a final temperature between 80°C and 100°C for 1 h with continued agitation, adjusting the pH to 6.5 to 8.0, adding an enzyme preparation comprised of one or more proteolytic enzymes to the pH-controlled, homogenized slurry at a dosage level of 0.25 to 4.0%, holding the resulting enzyme-dosed mixture is then held under conditions conducive to hydrolysis for 2 to 50 hours, deactivating the enzyme and drying the product to a moisture content of from 1 to 8 wt.-% moisture.

2. The method of claim 1, wherein the fermentation medium is essentially free of added ammonium ions.

3. The method of claim 1, wherein the enzymatically hydrolyzed vegetable protein is derived from corn.

4. The method of claim 1 , wherein the enzymatically hydrolyzed vegetable protein is derived from corn gluten meal.

5. The method of claim 4, wherein the corn gluten meal is derived from at least one of dent corn, waxy corn, or high amylase corn.

6. The method of claim 5, wherein the wherein the corn gluten meal has about 50% to about 70% protein and about 10 to about 35% starch.

7. The method of claim 1, wherein the enzymatically hydrolyzed vegetable protein is derived by hydrolyzing at least a portion of starch in corn gluten meal with the one or more amylases.

8. The method of claim 1, further comprising mashing the fermentable medium, wherein the enzymatically hydrolyzed vegetable protein is combined with the fermentable medium during the mashing step.

9. The method of claim 1, further comprising wort boiling the fermentable medium, wherein the enzymatically hydrolyzed vegetable protein is combined with the fermentable medium during the wort boiling step.

10. The method of claim 1, further comprising wort cooling the fermentable medium, wherein the enzymatically hydrolyzed vegetable protein is combined with the fermentable medium during the wort cooling step.

11. The method of claim 1, wherein the enzymatically hydrolyzed vegetable protein is combined with the fermentable medium during the fermenting step.

## Patentansprüche

1. Verfahren zur Herstellung eines fermentierten Getränks, umfassend:
a. Erhalten eines enzymatisch hydrolysierten pflanzlichen Proteins, wobei das pflanzliche Protein aus pflanzlichen Quellen stammt, die ausgewählt sind aus Zahnmais, Wachsmais, Mais mit hohem Amylosegehalt, Reis, Wachsreis, Erbsen, Kichererbsen, gelben Erbsen, Marinebohnen, Favabohnen, Linsen und/oder Weizen;
b. Kombinieren des enzymatisch hydrolysierten pflanzlichen Proteins mit einem fermentierbaren Medium nach Schritt a;
c. Fermentieren des fermentierbaren Mediums zur Bildung eines fermentierten Getränks, wobei das fermentierte Getränk Bier ist; wobei das enzymatisch hydrolysierte pflanzliche Protein durch Aufschlämmen der pflanzlichen Proteinquelle in einer größeren Gewichtsmenge Wasser erhalten wird, sodass die pflanzliche Proteinquelle zu 2 bis 50 Gew.-% vorhanden ist, Einstellen des pH-Werts auf 5,0 bis 6,5 mit organischen oder anorganischen Säuren oder mit Basen, Hinzufügen einer oder mehrerer Amylasen zu der Aufschlämmung der pflanzlichen Proteinquelle, Erhitzen der Aufschlämmung der pflanzlichen Proteinquelle in einem Reaktor unter gesteuerten Bedingungen auf eine Temperatur zwischen etwa 50 °C und 90 °C unter ausreichender Bewegung, um die pflanzliche Proteinquelle zu homogenisieren, und Halten auf einer Endtemperatur zwischen 80 °C und 100 °C für 1 Std. unter fortgesetzter Bewegung, Einstellen des pH-Wertes auf 6,5 bis 8,0, Hinzufügen eines Enzympräparats, das ein oder mehrere proteolytische Enzyme umfasst, zu der pH-gesteuerten, homogenisierten Aufschlämmung in einer Dosierung von 0,25 bis 4,0 %, Halten der resultierenden enzymdosierten Mischung unter hydrolysefördernden Bedingungen für 2 bis 50 Stunden, Deaktivieren des Enzyms und Trocknen des Produkts auf einen Feuchtigkeitsgehalt von 1 bis 8 Gew.-% Feuchtigkeit.

2. Verfahren nach Anspruch 1, wobei das Fermentationsmedium im Wesentlichen frei von zugesetzten Ammoniumionen ist.

3. Verfahren nach Anspruch 1, wobei das enzymatisch hydrolysierte pflanzliche Protein aus Mais abgeleitet ist.

4. Verfahren nach Anspruch 1, wobei das enzymatisch hydrolysierte pflanzliche Protein von Maisglutenmehl abgeleitet ist.

5. Verfahren nach Anspruch 4, wobei das Maisglutenmehl von mindestens einem von Zahnmais, Wachsmais oder Mais mit hohem Amylasegehalt abgeleitet ist.

6. Verfahren nach Anspruch 5, wobei das Maisglutenmehl etwa 50 % bis etwa 70 % Protein und etwa 10 bis etwa 35 % Stärke aufweist.

7. Verfahren nach Anspruch 1, wobei das enzymatisch hydrolysierte pflanzliche Protein durch Hydrolyse mindestens eines Abschnitts der Stärke in Maisglutenmehl mit einer oder mehreren Amylasen abgeleitet wird.

8. Verfahren nach Anspruch 1, ferner umfassend das Einmaischen des fermentierbaren Mediums, wobei das enzymatisch hydrolysierte pflanzliche Protein während des Einmaischschritts mit dem fermentierbaren Medium kombiniert wird.

9. Verfahren nach Anspruch 1, ferner umfassend das Würzekochen des fermentierbaren Mediums, wobei das enzymatisch hydrolysierte pflanzliche Protein während des Würzekochens mit dem fermentierbaren Medium kombiniert wird.

10. Verfahren nach Anspruch 1, ferner umfassend das Würzekühlen des fermentierbaren Mediums, wobei das enzymatisch hydrolysierte pflanzliche Protein während des Würzekühlschritts mit dem fermentierbaren Medium kombiniert wird.

11. Verfahren nach Anspruch 1, wobei das enzymatisch hydrolysierte pflanzliche Protein während des Fermentierungsschritts mit dem fermentierbaren Medium kombiniert wird.

## Revendications

1. Procédé de préparation d'une boisson fermentée, comprenant :
a. l'obtention d'une protéine végétale hydrolysée par voie enzymatique, dans lequel la protéine végétale est issue de sources végétales choisies parmi maïs denté, maïs cireux, maïs à haute teneur en amylose, riz, riz cireux, pois, pois chiche, pois jaune, haricots ronds blancs, féveroles, lentilles et/ou blé ;
b. après l'étape a, la combinaison de la protéine végétale hydrolysée par voie enzymatique avec un milieu fermentescible ;
c. la fermentation du milieu fermentescible pour former une boisson fermentée ; dans lequel la boisson fermentée est de la bière ; dans lequel la protéine végétale hydrolysée par voie enzymatique est obtenue par mise en suspension de la source de protéine végétale dans une quantité majeure en poids d'eau, de sorte que la source de protéine végétale soit présente à hauteur de 2 % à 50 % en poids, ajustement du pH de 5,0 à 6,5 avec des acides organiques ou inorganiques ou avec des bases, ajout d'une ou plusieurs amylases à la suspension de source de protéine végétale, chauffage de la suspension de source de protéine végétale dans un réacteur dans des conditions contrôlées à une température comprise entre environ 50 °C et 90 °C avec une agitation suffisante pour homogénéiser la source de protéine végétale et la maintenir à une température finale comprise entre 80 °C et 100 °C pendant 1 h avec une agitation continue, ajustement du pH de 6.5 à 8,0, ajout d'une préparation enzymatique comprenant une ou plusieurs enzymes protéolytiques à la suspension homogénéisée à pH contrôlé à un niveau de dosage de 0,25 à 4,0 %, maintien du mélange dosé en enzymes résultant dans des conditions propices à l'hydrolyse pendant 2 à 50 heures, désactivation de l'enzyme et séchage du produit jusqu'à une teneur en humidité de 1 à 8 % en poids d'humidité.

2. Procédé selon la revendication 1, dans lequel le milieu de fermentation est essentiellement dépourvu d'ions ammonium ajoutés.

3. Procédé selon la revendication 1, dans lequel la protéine végétale hydrolysée par voie enzymatique est dérivée du maïs.

4. Procédé selon la revendication 1, dans lequel la protéine végétale hydrolysée par voie enzymatique est dérivée du fin gluten de maïs.

5. Procédé selon la revendication 4, dans lequel le fin gluten de maïs est dérivé d'au moins l'un parmi maïs denté, maïs cireux ou maïs à haute teneur en amylase.

6. Procédé selon la revendication 5, dans lequel le fin gluten de maïs contient d'environ 50 % à environ 70 % de protéines et d'environ 10 % à environ 35 % d'amidon.

7. Procédé selon la revendication 1, dans lequel la protéine végétale hydrolysée par voie enzymatique est dérivée par hydrolyse d'au moins une partie de l'amidon de fin gluten de maïs par la ou les amylases.

8. Procédé selon la revendication 1, comprenant en outre le brassage du milieu fermentescible, dans lequel la protéine végétale hydrolysée par voie enzymatique est combinée au milieu fermentescible au cours de l'étape de brassage.

9. Procédé selon la revendication 1, comprenant en outre l'ébullition du moût du milieu fermentescible, dans lequel la protéine végétale hydrolysée par voie enzymatique est combinée au milieu fermentescible au cours de l'étape d'ébullition du moût.

10. Procédé selon la revendication 1, comprenant en outre le refroidissement du moût du milieu fermentescible, dans lequel la protéine végétale hydrolysée par voie enzymatique est combinée au milieu fermentescible pendant l'étape de refroidissement du moût.

11. Procédé selon la revendication 1, dans laquelle la protéine végétale hydrolysée par voie enzymatique est combinée au milieu fermentescible pendant l'étape de fermentation.
